# EUROPEAN PATENT APPLICATION

(11) **EP 4 583 504 A1**
(43) Date of publication of application: **09.07.2025**
(21) Application number: 23860059.7
(22) Date of filing: 17.08.2023
(51) Int. Cl.: H04N 5/222, H04N 5/272, H04N 23/60

(54) **INFORMATION PROCESSING DEVICE, INFORMATION PROCESSING METHOD, AND PROGRAM**

(30) Priority: 02.09.2022 JP 2022139862
(71) Applicant: Sony Group Corporation, Tokyo 108-0075 (JP)
(72) Inventor: TSUCHIYA, Takashi, Tokyo 108-0075 (JP)
(74) Representative: D Young & Co LLP
(86) International application number: PCT/JP2023/029689
(87) International publication number: WO 2024/048295

(57) **Abstract**

An information processing apparatus includes a captured video processing unit that performs determination processing of determining a position of a boundary marker in a target frame of a captured video with respect to a captured video obtained by imaging, by a camera, a display that displays a video including the boundary marker displayed at a peripheral edge portion in a display area of the display.

## Description

### TECHNICAL FIELD

The present technology relates to an information processing apparatus, an information processing method, and a program, and relates to, for example, a technology that can be used in the field of video production.

### BACKGROUND ART

As an imaging method for producing video content such as a movie, a technique is known in which a performer performs in front of what is called a green screen and then combines a background video.

Furthermore, in recent years, instead of green screen imaging, an imaging system has been developed in which, in a studio provided with a large display, a background video is displayed on the display, and a performer performs acting in front thereof, whereby the performer and the background can be imaged, and the imaging system is known as what is called virtual production, in-camera VFX, or light emitting diode (LED) wall virtual production.

Patent Document 1 below discloses a technique of a system that captures an image of an acting performer or an object in front of a background video.

### CITATION LIST

### PATENT DOCUMENT

Patent Document 1: US Patent Application Publication No. 2020/0145644 A

### SUMMARY OF THE INVENTION

### PROBLEMS TO BE SOLVED BY THE INVENTION

When a background video is displayed on a large display and then a performer and the background video are imaged by a camera, there are many advantages as compared with the green screen imaging, such that it is not necessary to separately combine the background video after the imaging, and the performer and the staff can visually understand the scene and carry out performance or determine whether the performance is good or bad.

However, the range in which the background video or the like is displayed is within the frame of the display and is finite. Depending on the position of the camera, the imaging direction, or the zoom angle of view, the imaging range may be out of the frame of the display.

In such a case, in order not to waste imaging, it is necessary to detect a protruding other portion later and correct the video by combining processing or the like, but this is extremely troublesome work. Furthermore, in order to avoid this, the camera operator needs to carefully capture the range of the display, and framing is limited.

Therefore, the present disclosure proposes a technique that does not reduce efficiency of video production even in a case where an image outside a frame of a display is captured.

### SOLUTIONS TO PROBLEMS

An information processing apparatus according to the present technology includes a captured video processing unit that performs determination processing of determining a position of a boundary marker in a target frame of a captured video with respect to a captured video obtained by imaging, by a camera, a display that displays a video including the boundary marker displayed at a peripheral edge portion in a display area of the display.

Furthermore, the information processing apparatus according to the present technology includes a marker processing unit that performs processing of adding a boundary marker to be displayed at a peripheral edge portion in a display area of a display to be displayed on the display to be captured by the camera.

For example, a boundary marker displayed at a peripheral edge portion of the display is added to the background video to be displayed on the display. The boundary marker enables accurate detection of the range of a frame of the display on the captured video. The video processing unit detects the boundary marker with respect to the captured video.

### BRIEF DESCRIPTION OF DRAWINGS

Fig. 1 is an explanatory diagram of an imaging system of an embodiment of the present technology.
Fig. 2 is an explanatory diagram of a background video according to a camera position of the imaging system of the embodiment.
Fig. 3 is an explanatory diagram of the background video according to the camera position of the imaging system of the embodiment.
Fig. 4 is an explanatory diagram of a video content producing step of the embodiment.
Fig. 5 is a block diagram of the imaging system of the embodiment.
Fig. 6 is a flowchart of background video generation of the imaging system of the embodiment.
Fig. 7 is a block diagram of the imaging system using a plurality of cameras of the embodiment.
Fig. 8 is a block diagram of an information processing apparatus of the embodiment.
Fig. 9 is an explanatory diagram of marker processing and captured video processing of the embodiment.
Fig. 10 is an explanatory diagram of a background video displayed in the embodiment.
Fig. 11 is an explanatory diagram of a boundary marker of the embodiment.
Fig. 12 is an explanatory diagram of a captured video including a boundary marker of the embodiment.
Fig. 13 is an explanatory diagram of an extracted marker image of the embodiment.
Fig. 14 is an explanatory diagram of a marker image whose position has been estimated of the embodiment.
Fig. 15 is an explanatory diagram of a mask of the embodiment.
Fig. 16 is an explanatory diagram of a final output video of the embodiment.
Fig. 17 is a flowchart of rendering including marker processing of the embodiment.
Fig. 18 is a flowchart of captured video processing of the embodiment.
Fig. 19 is an explanatory diagram of calculation of a peripheral light amount drop amount and a distortion amount of the embodiment.
Fig. 20 is an explanatory diagram of comparison for calculating a peripheral light amount drop amount and a distortion amount of the embodiment.
Fig. 21 is an explanatory diagram of mask generation of the embodiment.
Fig. 22 is an explanatory diagram of blending of masks of the embodiment.
Fig. 23 is an explanatory diagram of combining processing of the embodiment.
Fig. 24 is an explanatory diagram of pre-visualization of the embodiment.
Fig. 25 is a block diagram of a configuration example of pre-visualization of the embodiment.
Fig. 26 is a flowchart of a processing example in pre-visualization of the embodiment.

### MODE FOR CARRYING OUT THE INVENTION

Hereinafter, an embodiment will be described in the following order.
<1. Imaging System and Content Production>
<2. Configuration of Information Processing Apparatus>
<3. Marker Processing and Captured Video Processing>
<4. Processing Example>
<5. Processing in Pre-Visualization>
<6. Summary and Modification Examples>

Note that, in the present disclosure, "video" or "image" includes both a still image and a moving image. Furthermore, "video" does not only refer to a state of being displayed on a display, but video data that is not displayed on the display may be comprehensively referred to as "video". The same applies to "image".

For example, in the embodiment, a background video before being displayed on a display, a video captured by a camera, and a background video or a captured video switched by a switcher are not a video actually displayed but video data, but are referred to as "background video", "captured video", or the like for convenience.

### <1. Imaging System and Video Content Production>

An imaging system to which the technology of the present disclosure can be applied and production of a video content will be described.

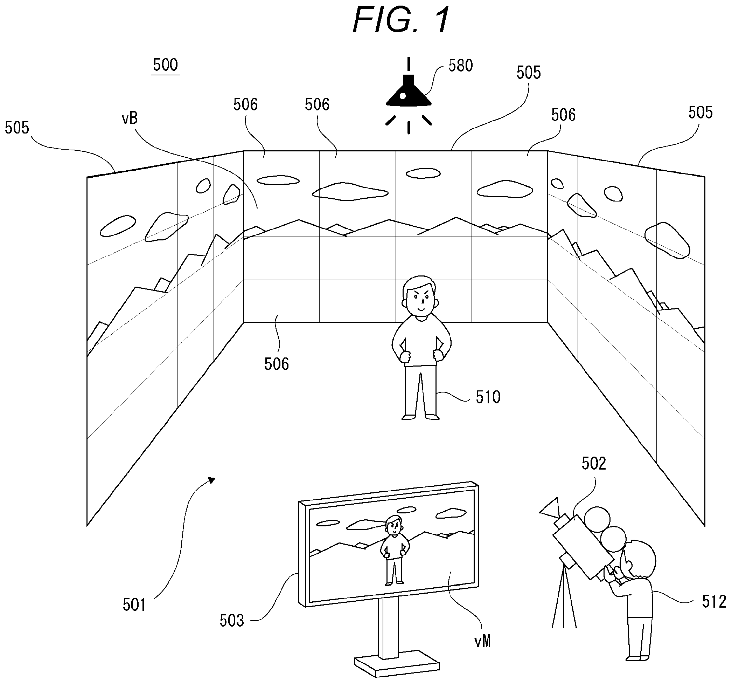

Fig. 1 schematically illustrates an imaging system 500. The imaging system 500 is a system that performs imaging as virtual production, and some of equipment arranged in an imaging studio is illustrated in the drawing.

In the imaging studio, a performance area 501 in which a performer 510 performs performance such as acting is provided. Large display apparatuses are arranged on at least a back surface, left and right side surfaces, and an upper surface of the performance area 501. Although the device type of the display apparatus is not limited, the drawing illustrates an example in which an LED wall 505 is used as an example of the large display apparatus.

One LED wall 505 forms a large panel by vertically and horizontally connecting and disposing a plurality of LED panels 506. The size of the LED wall 505 is not particularly limited, but is only necessary to be a size that is necessary or sufficient as a size for displaying a background when the performer 510 is imaged.

A necessary number of lights 580 are arranged at a necessary position such as above or on the side of the performance area 501 to light the performance area 501.

In the vicinity of the performance area 501, for example, a camera 502 for imaging a movie or other video content is disposed. A camera operator 512 can move the position of the camera 502, and can perform operation of an imaging direction, an angle of view, or the like. Of course, it is also conceivable that movement, angle of view operation, or the like of the camera 502 is performed by remote control. Furthermore, the camera 502 may automatically or autonomously move or change the angle of view. For this purpose, the camera 502 may be mounted on a camera platform or a mobile body.

The camera 502 collectively captures the performer 510 in the performance area 501 and the video displayed on the LED wall 505. For example, by displaying a scene as a background video vB on the LED wall 505, it is possible to capture a video similar to that in a case where the performer 510 actually exists and performs acting at the place of the scene.

An output monitor 503 is disposed near the performance area 501. The video captured by the camera 502 is displayed on the output monitor 503 in real time as a monitor video vM. Thus, a director and a staff who produce video content can confirm the captured video.

As described above, the imaging system 500 that images the performance by the performer 510 with the background of the LED wall 505 in the imaging studio has various advantages as compared with green screen imaging.

For example, in a case of the green screen imaging, it is difficult for the performer to imagine the background and the situation of the scene, which may affect the acting. Whereas, by displaying the background video vB, the performer 510 can easily perform acting, and the quality of acting is improved. Furthermore, it is easy for the director and other staff to determine whether or not the acting by the performer 510 matches the background and the situation of the scene.

Furthermore, post-production after imaging is more efficient than that in the case of the green screen imaging. This is because what is called chroma key composition may be unnecessary or color correction or reflection composition may be unnecessary. Furthermore, even in a case where chroma key composition is required at the time of imaging, it is only necessary to display green or blue video, and thus it is also helpful to improve the efficiency that it is not necessary to add a physical background screen.

In the case of the green screen imaging, a green hue increases on the performer's body, dress, and objects, and thus correction thereof is necessary. Furthermore, in the case of the green screen imaging, in a case where there is an object in which a surrounding scene is reflected, such as glass, a mirror, or a snowdome, it is necessary to generate and combine an image of the reflection, but this is troublesome work.

Whereas, in a case of imaging by the imaging system 500 in Fig. 1, the hue of the green does not increase, and thus the correction is unnecessary. Furthermore, by displaying the background video vB, the reflection on the actual article such as glass is naturally obtained and captured, and thus it is also unnecessary to combine a reflection video.

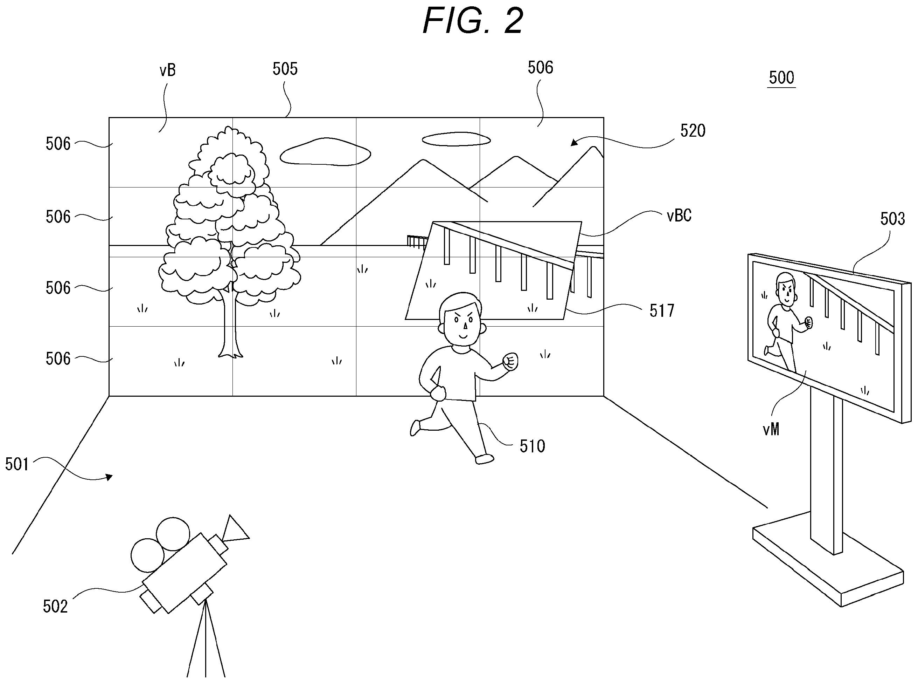

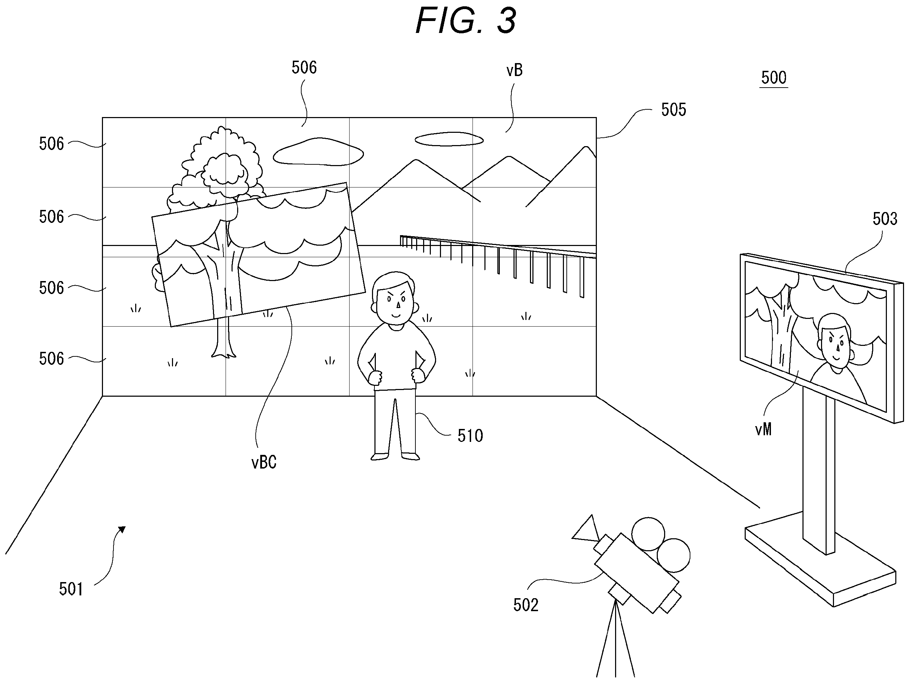

Here, the background video vB will be described with reference to Figs. 2 and 3. Even if the background video vB is displayed on the LED wall 505 and imaged together with the performer 510, the background of the imaged video is unnatural only by simply displaying the background video vB. This is because a background that is three-dimensional and has depth is actually used as the background video vB in a planar manner.

For example, the camera 502 can image the performer 510 in the performance area 501 from various directions, and can also perform zoom operation. The performer 510 also does not stop at one place. Then, the actual appearance of the background of the performer 510 should change according to the position, the imaging direction, the angle of view, or the like of the camera 502, but such a change cannot be obtained in the background video vB as a planar video. Thus, the background video vB is changed so that the background is similar to the actual appearance including parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, a capturing region video vBC is illustrated in the background video vB.

Note that a portion of the background video vB excluding the capturing region video vBC is referred to as an "outer frustum", and the capturing region video vBC is referred to as an "inner frustum".

The background video vB described here refers to the entire video displayed as the background including the capturing region video vBC (inner frustum).

The range of the capturing region video vBC (inner frustum) corresponds to a range actually imaged by the camera 502 in the display surface of the LED wall 505. Then, the capturing region video vBC is a video that expresses a scene actually seen when the position of the camera 502 is set as a viewpoint according to the position, the imaging direction, the angle of view, and the like of the camera 502.

Specifically, 3D background data that is a 3D (three dimensions) model as a background is prepared, and the capturing region video vBC is sequentially rendered on the basis of the viewpoint position of the camera 502 with respect to the 3D background data in real time.

Note that the range of the capturing region video vBC is actually a range slightly wider than the range imaged by the camera 502 at the time point. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the capturing region video vBC rendered in real time in this manner is combined with the video of the outer frustum. The video of the outer frustum used in the background video vB may be rendered in advance on the basis of the 3D background data or may be rendered in real time for each frame or each intermittent frame, and the video of the capturing region video vBC (inner frustum) is incorporated into a part of the video of the outer frustum to generate the entire background video vB.

Note that there is a case where the video of the outer frustum is also rendered for each frame similarly to the inner frustum, but here, a static video is taken as an example, and in the following description, a case where only the head frame of the video of the outer frustum is rendered will be mainly described as an example.

Thus, even when the camera 502 is moved back and forth, or left and right, or zoom operation is performed, the background of the range imaged together with the performer 510 is imaged as a video according to a change in the viewpoint position and the field of view (FOV) accompanying the actual movement of the camera 502.

As illustrated in Figs. 2 and 3, the monitor video vM including the performer 510 and the background is displayed on the output monitor 503, and this is the captured video. The background of the monitor video vM is the capturing region video vBC. That is, the background included in the imaged video is a real-time rendered video.

As described above, in the imaging system 500 of the embodiment, the background video vB including the capturing region video vBC is changed in real time so that not only the background video vB is simply displayed in a planar manner but also a video similar to that in a case where a landscape is actually imaged can be imaged.

Note that, by rendering only the capturing region video vBC as a range reflected by the camera 502 in real time instead of the entire background video vB displayed on the LED wall 505, a device may be made to reduce the processing load of the system.

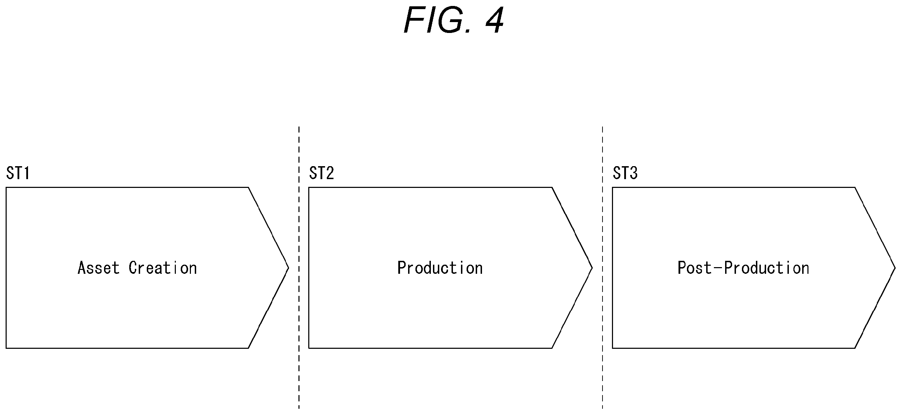

Here, a producing step for a video content as virtual production in which imaging is performed by the imaging system 500 will be described. As illustrated in Fig. 4, the video content producing step is roughly divided into three stages. The stages are asset creation ST1, production ST2, and post-production ST3.

The asset creation ST1 is a step of producing 3D background data for displaying the background video vB. As described above, the background video vB is generated by performing rendering in real time using the 3D background data at the time of imaging. For this purpose, the 3D background data as a 3D model is produced in advance.

Examples of a method of producing the 3D background data include full computer graphics (CG), point cloud data scanning, and photogrammetry.

The full CG is a method of producing a 3D model with computer graphics. Among the three methods, the method requires the most man-hours and time, but is preferably used in a case where an unrealistic video, a video that is difficult to capture in practice, or the like is desired to be the background video vB.

The point cloud data scanning is a method of generating a 3D model based on point cloud data by performing distance measurement from a certain position using, for example, LiDAR, capturing an image of 360 degrees from the same position with a camera, and placing color data captured by the camera on a point measured by LiDAR. Compared with the full CG, the 3D model can be produced in a short time. Furthermore, it is easy to produce a 3D model with higher definition than that by photogrammetry.

The photogrammetry is a photogrammetry technology for analyzing parallax information from two-dimensional images obtained by imaging an object from a plurality of viewpoints to obtain dimensions and shapes. 3D model production can be performed in a short time.

Note that point cloud information acquired by LiDAR may be used in 3D data generation by the photogrammetry.

In the asset creation ST1, a 3D model to be 3D background data is produced by using these methods, for example. Of course, the above methods may be used in combination. For example, a part of the 3D model produced by the point cloud data scanning or photogrammetry is produced by CG and combined.

The production ST2 is a step of performing imaging in the imaging studio as illustrated in Fig. **1****.** Element techniques in this case include real-time rendering, background display, camera tracking, lighting control, and the like.

The real-time rendering is rendering processing for obtaining the capturing region video vBC at each time point (each frame of the background video vB) as described with reference to Figs. 2 and 3. This is to render the 3D background data produced in the asset creation ST1 from a viewpoint according to the position or the like of the camera 502 at each time point.

In this manner, the real-time rendering is performed to generate the background video vB of each frame including the capturing region video vBC, and the background video vB is displayed on the LED wall 505.

The camera tracking is performed to obtain imaging information by the camera 502, and tracks position information, an imaging direction, an angle of view, and the like of the camera 502 at each time point. By providing the imaging information including these to a rendering engine in association with each frame, real-time rendering according to the viewpoint position and the like of the camera 502 can be executed.

The imaging information is information linked with or associated with a video as metadata.

It is assumed that the imaging information includes position information of the camera 502 at each frame timing, a direction of the camera, an angle of view, a focal length, an F value (aperture value), a shutter speed, lens information, and the like.

The lighting control is to control the state of lighting in the imaging system 500, and specifically, to control the light amount, emission color, lighting direction, and the like of the light 580. For example, the lighting control is performed according to time setting, place setting, and the like of a scene to be imaged.

The post-production ST3 indicates various types of processing performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed.

As the video effect, combining of a CG video, a special effect video, and the like may be performed.

Next, a configuration of the imaging system 500 used in the production ST2 will be described.

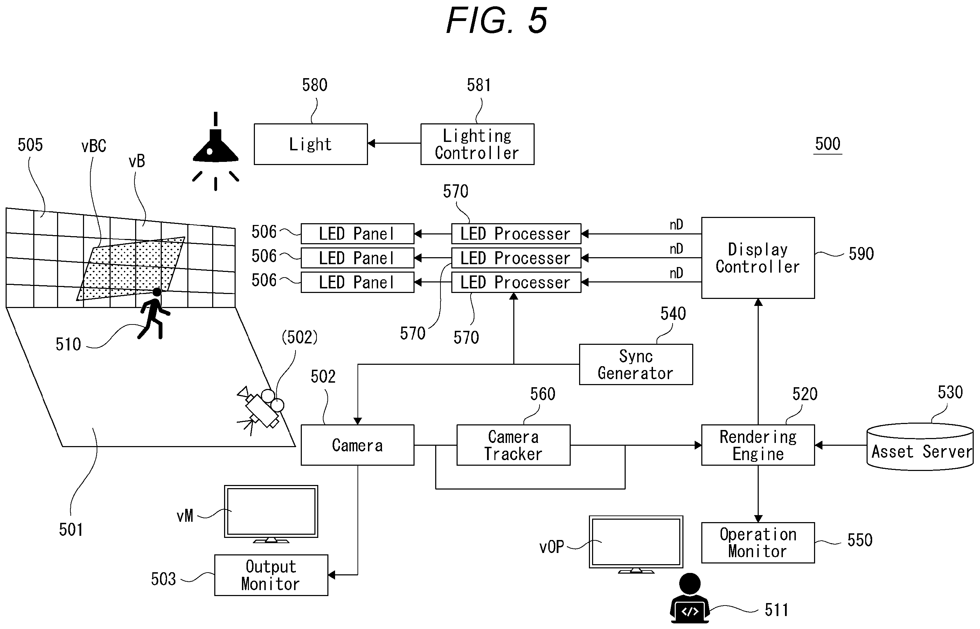

Fig. 5 is a block diagram illustrating a configuration of the imaging system 500 whose outline has been described with reference to Figs. 1, 2, and **3****.**

The imaging system 500 illustrated in Fig. 5 includes the LED wall 505 including the plurality of LED panels 506, the camera 502, the output monitor 503, and the light 580 described above. As illustrated in Fig. 5, the imaging system 500 further includes a rendering engine 520, an asset server 530, a sync generator 540, an operation monitor 550, camera trackers 560, LED processors 570, a lighting controller 581, and a display controller 590.

Each of the LED processors 570 is provided corresponding to one or more LED panels 506, and performs video display drive of the corresponding one or more LED panels 506.

The sync generator 540 generates a synchronization signal for synchronizing a frame timing of a display video by the LED panel 506 and a frame timing of imaging by the camera 502, and supplies the synchronization signal to each LED processor 570, the camera 502, and the rendering engine 520.

The camera tracker 560 generates imaging information by the camera 502 at each frame timing and supplies the imaging information to the rendering engine 520. For example, the camera tracker 560 detects the position information of the camera 502 relative to the position of the LED wall 505 or a predetermined reference position and the imaging direction of the camera 502 as one of pieces of the imaging information, and supplies them to the rendering engine 520.

As a specific detection method by the camera tracker 560, there is a method in which a reflector is randomly arranged on the ceiling, and a position is detected from reflected light of infrared light emitted from the camera tracker 560 assembled to the camera 502 with respect to the reflector. Furthermore, as a detection method, there is also a method of estimating the self-position of the camera 502 by information of a gyro mounted on a platform of the camera 502 or a main body of the camera 502, or image recognition of a captured video of the camera 502.

Furthermore, the angle of view, the focal length, the F-number, the shutter speed, the lens information, or the like may be supplied from the camera 502 to the rendering engine 520 as the imaging information.

The asset server 530 is a server that can store the 3D model produced in the asset creation ST1, that is, 3D background data on a recording medium and read the 3D model as necessary. That is, the asset server 530 functions as a database (DB) of 3D background data.

The rendering engine 520 performs processing of generating the background video vB to be displayed on the LED wall 505. For this purpose, the rendering engine 520 reads necessary 3D background data from the asset server 530. Then, the rendering engine 520 generates a video of the outer frustum used in the background video vB as a video obtained by rendering the 3D background data in a form of being viewed from spatial coordinates designated in advance.

Furthermore, the rendering engine 520 specifies the viewpoint position and the like with respect to the 3D background data using the imaging information supplied from the camera tracker 560 or the camera 502, and renders the capturing region video vBC (inner frustum).

Moreover, the rendering engine 520 combines the capturing region video vBC dynamically changing according to the movement of the camera 502 with respect to the outer frustum to generate the background video vB as the video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences, manufacturing errors, and the like of color development and the like between display units.

Note that the display controller 590 may not be provided, and the rendering engine 520 may perform these types of processing. That is, the rendering engine 520 may generate the divided video signals nD, perform calibration, and transmit the divided video signals nD to the respective LED panels 506.

By the LED processors 570 driving the respective LED panels 506 on the basis of the respective received divided video signals nD, the entire background video vB is displayed on the LED wall 505. The background video vB includes the capturing region video vBC rendered according to the position or the like of the camera 502 at that time point.

The camera 502 can image the performance by the performer 510 including the background video vB displayed on the LED wall 505 in this manner. The video obtained by imaging by the camera 502 is recorded on a recording medium in the camera 502 or an external recording device (not illustrated), and is supplied to the output monitor 503 in real time and displayed as the monitor video vM.

The operation monitor 550 displays an operation image vOP for controlling the rendering engine 520. An engineer 511 can perform necessary settings and operations regarding rendering of the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. For that purpose, the lighting controller 581 may perform light emission control in accordance with an instruction from the rendering engine 520, a master controller (not illustrated), or the like. Furthermore, the rendering engine 520 may control the light 580.

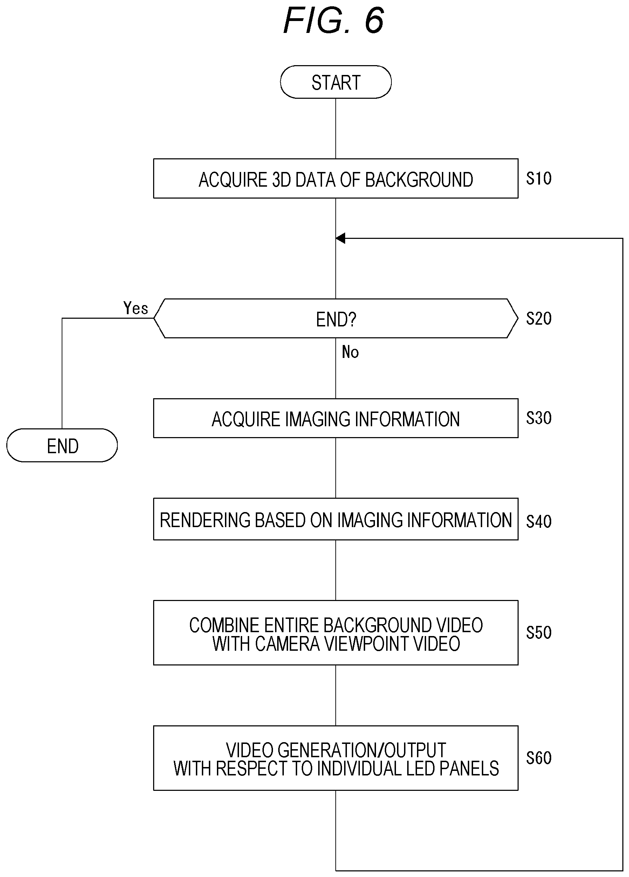

Fig. 6 illustrates an example of processing by the rendering engine 520 in the imaging system 500 having such a configuration.

In step S10, the rendering engine 520 reads the 3D background data to be used this time from the asset server 530, and deploys the 3D background data to an internal work area.

At this stage, a video used as the outer frustum may be generated.

Thereafter, the rendering engine 520 repeats the processing of steps S30 to S60 until it is determined in step S20 that the display of the background video vB based on the read 3D background data is ended.

In step S30, the rendering engine 520 acquires the imaging information from the camera tracker 560 or the camera 502. Thus, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, or the like of the camera 502 to be reflected in the current frame, and rendering is performed. At this time, video processing reflecting the focal length, the F-number, the shutter speed, the lens information, or the like can also be performed. By this rendering, video data as the capturing region video vBC (inner frustum) can be obtained. The outer frustum is generated in advance as a fixed video in step S10, and may be generated for each frame in step S40.

In step S50, the rendering engine 520 performs processing of combining the outer frustum as the entire background video with the video reflecting the viewpoint position of the camera 502, that is, the capturing region video vBC. For example, the processing is to combine a video generated by reflecting the viewpoint of the camera 502 with a video of the entire background rendered at a specific reference viewpoint. Thus, the background video vB of one frame displayed on the LED wall 505, that is, the background video vB including the capturing region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the divided video signals nD are transmitted to the LED processors 570, respectively.

Through the above processing, the background video vB including the capturing region video vBC imaged by the camera 502 is displayed on the LED wall 505 at each frame timing.

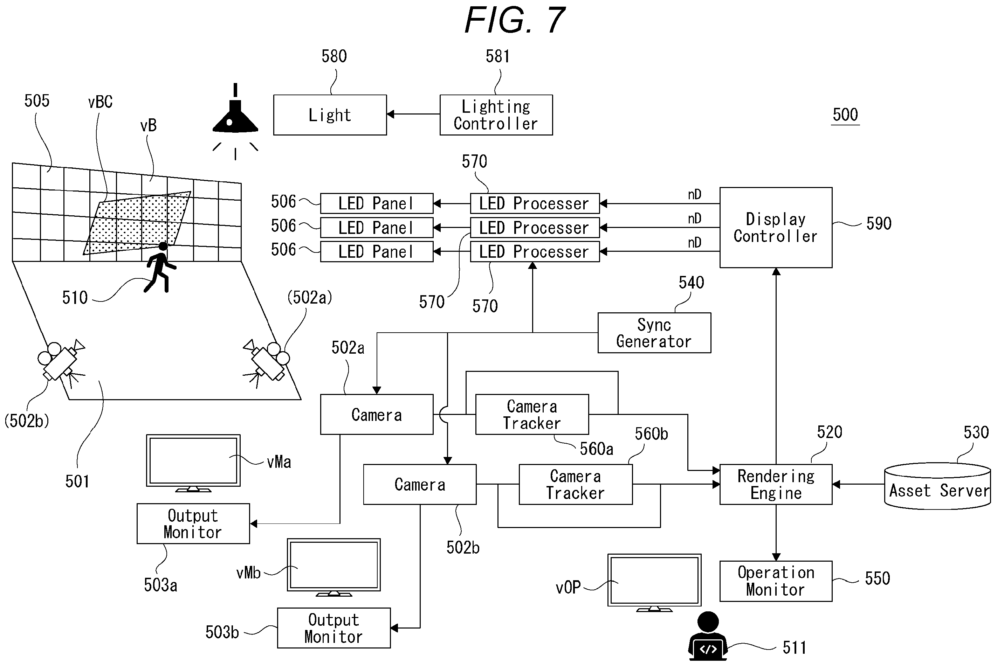

By the way, only one camera 502 is illustrated in Fig. 5, but imaging can be performed by a plurality of cameras 502. Fig. 7 illustrates a configuration example in a case where a plurality of cameras 502a and 502b is used. The cameras 502a and 502b are enabled to independently perform imaging in the performance area 501. Furthermore, synchronization between the cameras 502a and 502b and the LED processors 570 is maintained by the sync generator 540.

Output monitors 503a and 503b are provided corresponding to the cameras 502a and 502b, respectively, and are configured to display the videos imaged by the corresponding cameras 502a and 502b as monitor videos vMa and vMb, respectively.

Furthermore, camera trackers 560a and 560b are provided corresponding to the cameras 502a and 502b, respectively, and detect positions and imaging directions of the corresponding cameras 502a and 502b, respectively. The imaging information from the camera 502a and the camera tracker 560a and the imaging information from the camera 502b and the camera tracker 560b are transmitted to the rendering engine 520.

The rendering engine 520 can perform rendering to obtain the background video vB of each frame by using the imaging information of either the camera 502a side or the camera 502b side.

Note that although Fig. 7 illustrates an example in which two cameras 502a and 502b are used, it is also possible to perform imaging by using three or more cameras 502.

However, when the plurality of cameras 502 is used to render and display the capturing region video vBC (inner frustum) corresponding to each camera 502 using each piece of imaging information, there is a circumstance that the respective capturing region videos vBC interfere with each other. For example, in the example in which the two cameras 502a and 502b are used as illustrated in Fig. 7, the capturing region video vBC corresponding to the camera 502a is illustrated, but in a case where the video by the camera 502b is used, the capturing region video vBC corresponding to the camera 502b is also necessary. In this case, when the respective capturing region videos vBC corresponding to the cameras 502a and 502b are simply displayed, they interfere with each other. For this reason, it is necessary to contrive the display of the capturing region video vBC.

### <2. Configuration of Information Processing Apparatus>

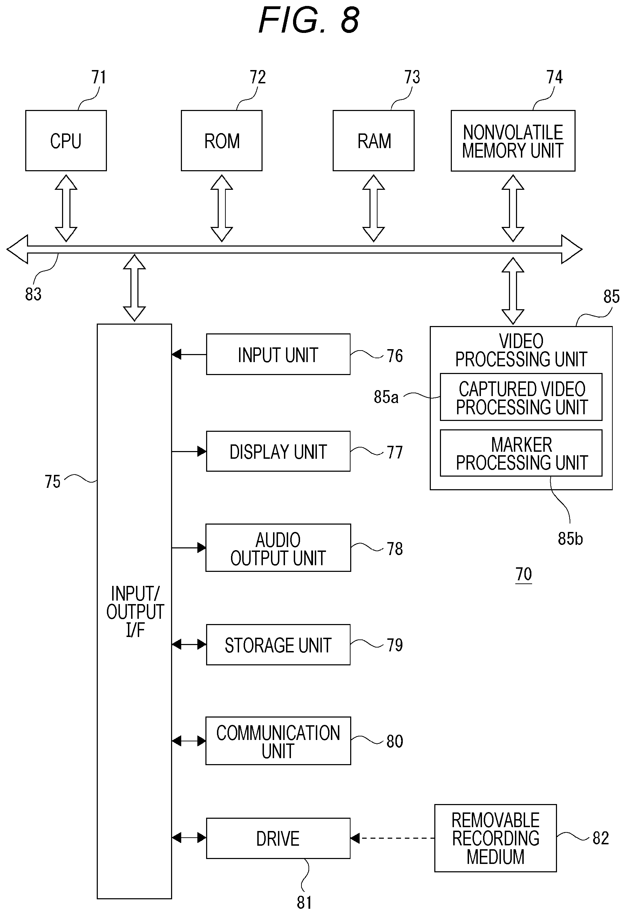

Next, a configuration example of an information processing apparatus 70 that can be used in the asset creation ST1, the production ST2, and the post-production ST3 will be described with reference to Fig. **8****.**

The information processing apparatus 70 is an apparatus capable of performing information processing, particularly video processing, such as a computer device. Specifically, a personal computer, a workstation, a portable terminal apparatus such as a smartphone or a tablet, a video editing apparatus, and the like are assumed as the information processing apparatus 70. Furthermore, the information processing apparatus 70 may be a computer apparatus configured as a server apparatus or a calculation apparatus in cloud computing.

In the case of the present embodiment, specifically, the information processing apparatus 70 can function as a 3D model production apparatus that produces a 3D model in the asset creation ST1.

Furthermore, the information processing apparatus 70 can also function as the rendering engine 520 and the asset server 530 constituting the imaging system 500 used in the production ST2.

Furthermore, the information processing apparatus 70 can also function as a video editing apparatus that performs various types of video processing in the post-production ST3.

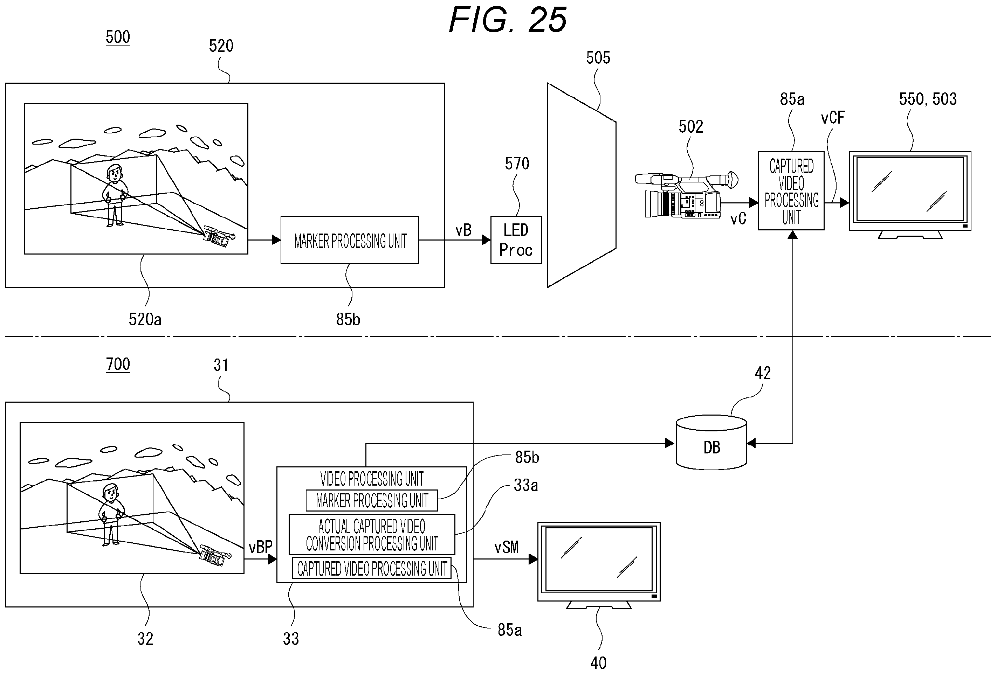

Moreover, the information processing apparatus 70 can also function as an information processing apparatus (rendering engine 31) that generates a simulation video vSM in pre-visualization as described later with reference to Fig. 25 and the like.

A CPU 71 of the information processing apparatus 70 illustrated in Fig. 8 performs various types of processing in accordance with a program stored in a ROM 72 or a nonvolatile memory unit 74 such as, for example, an electrically erasable programmable read-only memory (EEP-ROM), or a program loaded from a storage unit 79 to a RAM 73. The RAM 73 also stores, as appropriate, data and the like necessary for the CPU 71 to perform the various types of processing.

A video processing unit 85 is configured as a processor that performs various types of video processing. For example, the processor is a processor capable of performing any one of 3D model generation processing, rendering, DB processing, video processing including color/luminance adjustment processing, video editing processing, video analysis/detection processing, and the like, or a plurality of types of processing.

In particular, Fig. 8 illustrates a captured video processing unit 85a and a marker processing unit 85b as processing functions in the video processing unit 85.

There is an example in which the captured video processing unit 85a and the marker processing unit 85b are provided in the information processing apparatus 70 as the rendering engine 520, for example.

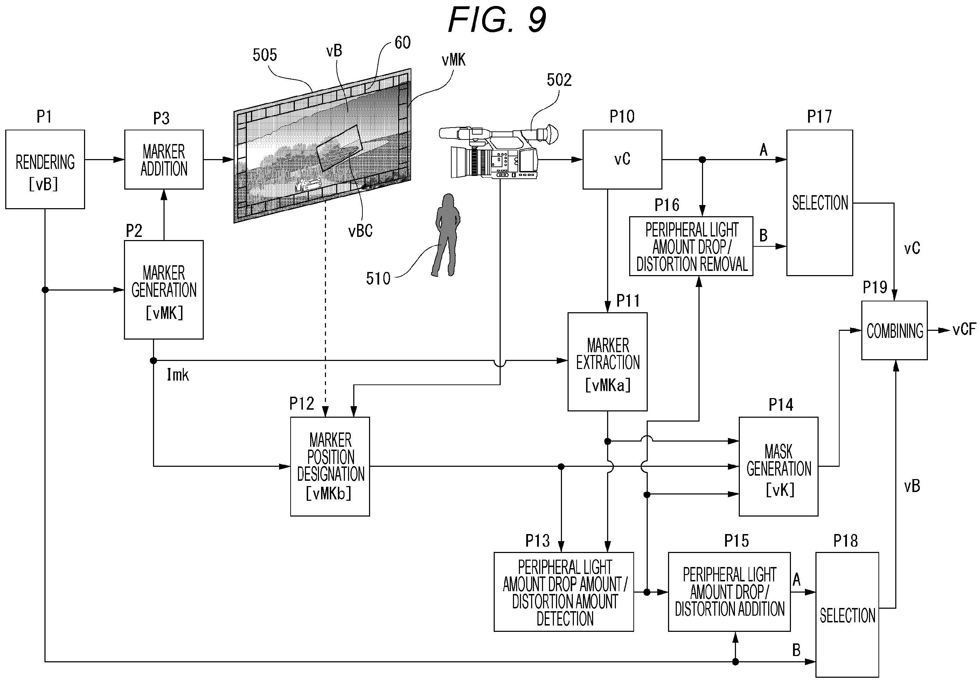

The marker processing unit 85b is a function of performing processing of adding a boundary marker 60 (see Fig. 9 and the like) described later to the rendered background video vB. Thus, the image of the boundary marker 60 is included in the background video vB displayed on the LED wall 505.

The captured video processing unit 85a is a function of performing determination processing of determining the position of the boundary marker 60 in a target frame of a captured video vC obtained by imaging the background video vB including the boundary marker 60 displayed on the LED wall 505. The target frame refers to a frame that is a processing target of the captured video processing at a certain time point. For example, each frame constituting the captured video vC as a moving image is sequentially set as a target frame.

Note that the position of the captured video vC in the target frame (for example, the position of the boundary marker 60) is a position of the frame in the image, and does not include positions of temporally different frames.

Details of processing of the video processing unit 85 by the functions of the captured video processing unit 85a and the marker processing unit 85b will be described later.

Note that, as the video processing unit 85 in the information processing apparatus 70, an example in which the captured video processing unit 85a is included but the marker processing unit 85b is not included, and an example in which the marker processing unit 85b is included but the captured video processing unit 85a is not included are also assumed.

The video processing unit 85 can be implemented by, for example, a CPU, a graphics processing unit (GPU), general-purpose computing on graphics processing units (GPGPU), an artificial intelligence (AI) processor, or the like that is separate from the CPU 71.

Note that the video processing unit 85 may be provided as a function in the CPU 71.

The CPU 71, the ROM 72, the RAM 73, the nonvolatile memory unit 74, and the video processing unit 85 are connected to one another via a bus 83. Furthermore, an input/output interface 75 is also connected to the bus 83.

An input unit 76 including an operation element and an operation device is connected to the input/output interface 75. For example, as the input unit 76, various operators and operation devices such as a keyboard, a mouse, a key, a trackball, a dial, a touch panel, a touch pad, and a remote controller are assumed.

A user operation is detected by the input unit 76, and a signal corresponding to an input operation is interpreted by the CPU 71.

A microphone is also assumed as the input unit 76. It is also possible to input voice uttered by the user as operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various displays, and includes, for example, a display device provided in a housing of the information processing apparatus 70, a separate display device connected to the information processing apparatus 70, and the like.

The display unit 77 performs display of various images, operation menus, icons, messages, and the like, that is, display as a graphical user interface (GUI), on a display screen on the basis of an instruction from the CPU 71.

In some cases, the storage unit 79 including a hard disk drive (HDD), a solid-state memory, or the like or a communication unit 80 is connected to the input/output interface 75.

The storage unit 79 can store various data and programs. A DB can also be configured in the storage unit 79.

For example, in a case where the information processing apparatus 70 functions as the asset server 530 or the rendering engine 31 to be described later, a DB that stores the 3D background data group can be constructed using the storage unit 79.

The communication unit 80 performs communication processing via a transmission line such as the Internet, wired/wireless communication with various devices such as an external DB, an editing apparatus, and an information processing apparatus, and communication by bus communication and the like.

For example, in a case where the information processing apparatus 70 functions as the rendering engine 520 or the rendering engine 31 to be described later, the communication unit 80 can access the DB as the asset server 530 or receive the imaging information from the camera 502 or the camera tracker 560.

Furthermore, also in a case of the information processing apparatus 70 used in the post-production ST3, the communication unit 80 can access the DB as the asset server 530.

A drive 81 is also connected to the input/output interface 75, as necessary, and a removable recording medium 82 such as a magnetic disk, an optical disk, a magneto-optical disk, a semiconductor memory, or the like is appropriately mounted.

The drive 81 can read video data, various computer programs, and the like from the removable recording medium 82. The read data is stored in the storage unit 79, and video and audio included in the data are output by the display unit 77 and the audio output unit 78. Furthermore, the computer program and the like read from the removable recording medium 82 are installed in the storage unit 79, as necessary.

In the information processing apparatus 70, for example, software for the processing in the present embodiment can be installed via network communication by the communication unit 80 or the removable recording medium 82. Alternatively, the software may be stored in advance in the ROM 72, the storage unit 79, or the like.

### <3. Marker Processing and Captured Video Processing>

Marker processing and captured video processing according to the embodiment will be described.

Fig. 9 illustrates marker processing and captured video processing in the processing of virtual production.

For example, by the function of the marker processing unit 85b in the video processing unit 85 in Fig. 8, marker generation processing P2 and marker addition processing P3 in Fig. 9 are performed.

The marker generation processing P2 and the marker addition processing P3 are executed as processing in the rendering engine 520, for example, at the time of imaging in the virtual production, that is, when the background video vB is displayed on the LED wall 505.

Furthermore, captured video processing (P11 to P19) is performed by the function of the captured video processing unit 85a in the video processing unit 85 of Fig. 8.

The captured video processing (P11 to P19) may be performed in real time at the time of imaging, for example, in the rendering engine 520 to which the captured video vC is input or in another device, or may be performed at the stage of the post-production ST3.

Here, as an example, description will be given on the assumption that the marker generation processing and the captured video processing are performed by the rendering engine 520 in real time at the time of imaging.

For example, the video processing unit 85 of the information processing apparatus 70 as the rendering engine 520 generates the background video vB as rendering P1 in Fig. 9.

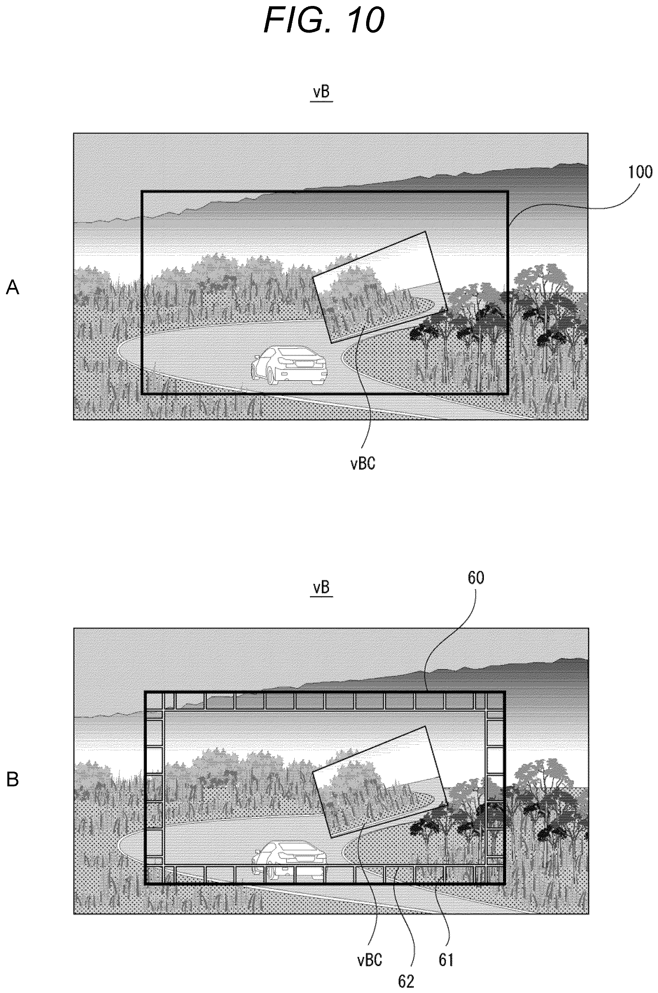

Fig. 10A illustrates an example of the background video vB. Note that the rendering engine 520 generates the background video vB as illustrated in Fig. 10A, but this example is a video of a range wider than the display area of the LED wall 505. For example, a range of the actual display area 100 indicated by a broken line is a video actually displayed on the LED wall 505. The rendering engine 520 may generate the background video vB in a range equivalent to the display range of the LED wall 505, but by generating the background video vB in a wider range as illustrated in Fig. 10A, the background video vB can be used for combining in the subsequent captured video processing.

Furthermore, the background video vB also includes a capturing region video vBC (inner frustum).

The video processing unit 85 of the rendering engine 520 performs the marker generation processing P2 illustrated in Fig. 9 by the function of the marker processing unit 85b.

In the marker generation processing P2, information of the rendered background video vB and the actual display area 100 is input to generate a marker image vMK.

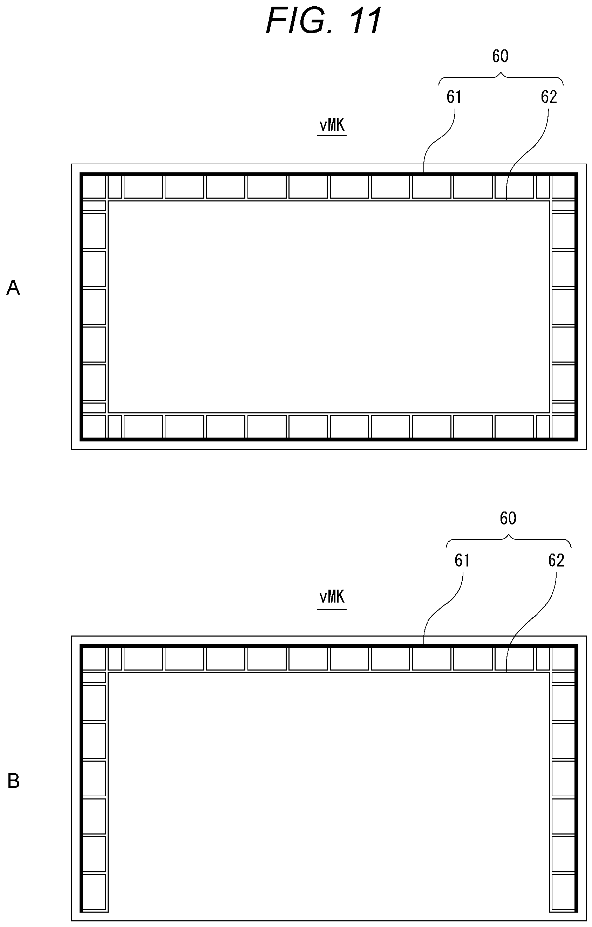

Figs. 11A and 11B illustrate examples of the marker image vMK.

The example of the marker image vMK in Fig. 11A is an example in which the pattern as the boundary marker 60 surrounds the peripheral edge portion.

The example of the marker image vMK in Fig. 11B is an example in which the pattern as the boundary marker 60 is arranged at the left, right, and upper peripheral edge portions.

The boundary marker 60 enables to detect that the imaging range of the camera 502 imaging the LED wall 505 protrudes from the LED wall 505. Accordingly, it is preferable that the boundary marker 60 is formed over the entire circumference of the peripheral edge portion as illustrated in Fig. 11A. However, in the performance area 501 of the imaging system 500 as illustrated in Fig. 1, a set of real scenes connected to the content of the background video vB may be provided, and in this case, there is no problem even if the imaging range of the camera 502 protrudes below the LED wall 505. In such a case, the boundary marker 60 as illustrated in Fig. 11B may be used.

The boundary marker 60 as illustrated in Figs. 11A and 11B includes a boundary line 61 and a detection pattern 62.

The boundary line 61 is a line formed in, for example, a frame shape for clearly indicating the edge of the LED wall 505.

The detection pattern 62 is a vertical and horizontal grid-like pattern provided to determine the peripheral light amount drop amount and the spatial distortion amount caused by the lens of the camera 502. Note that the pattern shape is an example, and the pattern shape is not limited thereto.

Such a pattern shape of the boundary marker 60 only needs to be held in advance in the system.

Then, in the marker generation processing P2 illustrated in Fig. 9, the rendering engine 520 sets the luminance, color, and size of the boundary marker 60 to generate the marker image vMK.

The luminance and color of the boundary marker 60 are set to be conspicuous in the background video vB with reference to the luminance and color of the background video vB. For example, if the background video vB indicates a bright scene, the luminance of the boundary marker 60 is decreased, and if the background video vB indicates a dark scene, the luminance of the boundary marker 60 is increased. Furthermore, the color is also set according to the color of the background video vB.

Moreover, the rendering engine 520 sets the size of the boundary marker 60 so that the boundary marker 60 is displayed at the peripheral edge portion in the range of the actual display area 100. Note that the lines of the actual display area 100 are added for description, and the background video vB does not actually include a line indicating such an actual display area 100.

Next, the video processing unit 85 of the rendering engine 520 performs marker addition processing P3 by the function of the marker processing unit 85b.

As the marker addition processing P3, the rendering engine 520 performs processing of combining the marker image vMK with the rendered background video vB and adding the boundary marker 60.

That is, a pixel value at the position corresponding to the boundary marker 60 in the original background video vB is replaced with a pixel value of the boundary marker 60.

Fig. 10B illustrates the background video vB to which the boundary marker 60 is added. The boundary marker 60 is added to a position serving as a peripheral edge portion in the range of the actual display area 100 in the background video vB of Fig. 10A.

The background video vB to which such a boundary marker 60 is added is displayed on the LED wall 505. Therefore, as illustrated in Fig. 9, the boundary marker 60 is displayed on the peripheral edge portion of the LED wall 505.

The background video vB of such an LED wall 505 and the performer 510 are captured by the camera 502. Note that the background video vB captured by the camera 502 is a range of the capturing region video vBC. In Fig. 9, the capturing region video vBC is within the LED wall 505, and the imaging range of the camera 502 does not protrude from the LED wall 505. Moreover, in the example of the drawing, the capturing region video vBC does not overlap the boundary marker 60.

Since the capturing region video vBC substantially matches the imaging range of the camera 502, in a case where the imaging range of the camera 502 protrudes from the LED wall 505, a part of the capturing region video vBC protrudes from the LED wall 505.

Next, captured video processing on the captured video vC by the camera 502 will be described.

For example, it is assumed that the rendering engine 520 receives an input of the captured video vC by the camera 502, performs captured video processing on each frame of the captured video vC, and outputs a final output video vCF as a final video obtained by imaging. That is, the captured video processing is sequentially performed with each frame of the captured video vC as a target frame.

Specifically, by the function of the captured video processing unit 85a, the rendering engine 520 performs, on the target frame, marker extraction processing P11, marker position estimation processing P12, peripheral light amount drop amount/distortion amount detection processing P13, mask generation processing P14, peripheral light amount drop/distortion addition processing P15, peripheral light amount drop/distortion removal processing P16, selection processing P17 and P18, and combining processing P19 in Fig. 9.

Note that the processing of the rendering engine 520 is an example, and the following captured video processing may be performed as processing of another device or a processor inside the camera 502.

As illustrated in Fig. 9, the captured video vC is output by the camera 502 (output processing P10). The camera 502 simultaneously captures the capturing region video vBC in the background video vB displayed on the LED wall 505 and the actual scene of the performer 510 and the like. At that time, the outside of the LED wall 505 may be included in the captured video vC depending on the position, imaging direction, and angle of view of the camera 502. In this case, the scene outside the frame of the LED wall 505 and the boundary marker 60 displayed at the peripheral edge portion of the LED wall 505 are also imaged together.

Alternatively, even if the imaging range of the camera 502 does not reach outside the frame of the LED wall 505, imaging may be performed including the portion of the boundary marker 60.

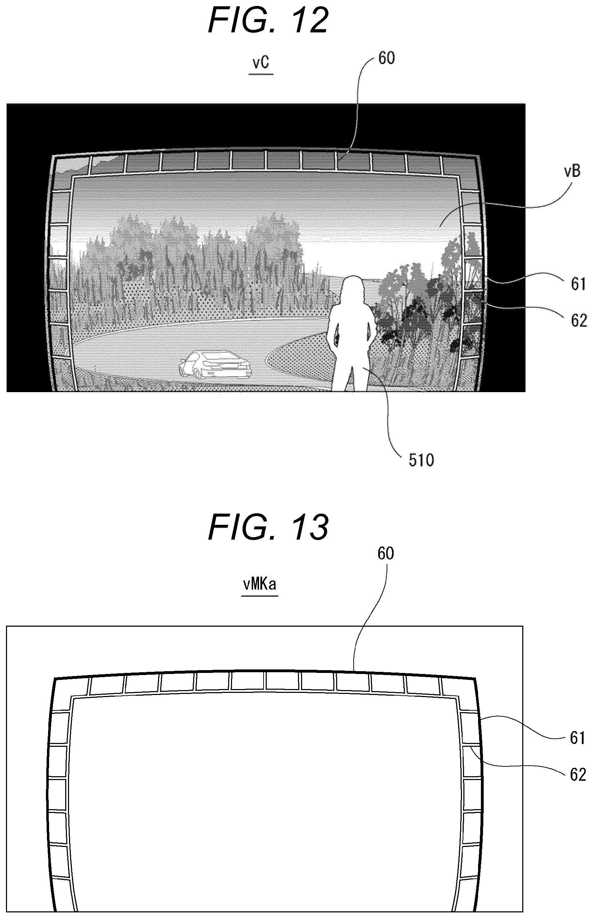

Fig. 12 illustrates an example of the captured video vC. This is a case where the imaging range by the camera 502 protrudes to the upper side, the left side, and the right side of the LED wall 505. For example, in a case where the camera 502 has a wide angle exceeding the width of the LED wall 505 and the imaging direction is too upward, the captured video vC as illustrated in Fig. 12 is obtained.

In addition to the capturing region video vBC in the background video vB and the performer 510, the captured video vC includes the boundary marker 60 and a scene (black in the drawing) around the LED wall 505.

For example, the rendering engine 520 performs marker extraction processing P11 in Fig. 9 on the target frame of such a captured video vC.

For marker extraction, the rendering engine 520 refers to information (marker generation information Imk) at the time of the marker generation processing P2. That is, luminance and color information of the boundary marker 60 is acquired. The marker generation information Imk is information such as luminance, color, pattern shape, and size of the boundary marker 60 set in the marker generation processing P2.

The rendering engine 520 sets threshold levels of luminance and color on the basis of the marker generation information Imk, compares the pixel values of the captured video vC, and extracts the boundary marker 60 from the captured video vC. For example, a marker extraction image vMKa as illustrated in Fig. 13 is generated from the captured video vC in Fig. 12.

Furthermore, the rendering engine 520 performs the marker position estimation processing P12 illustrated in Fig. 9. This is processing of estimating at which position of the target frame in the captured video vC the boundary marker 60 is displayed in calculation.

If the relative positional relationship between the LED wall 505 and the camera 502, the angle of view, and the size of the image sensor for the target frame of the current captured video vC are known, the position of the boundary marker 60 in the captured video vC can be calculated.

Information of the arrangement position and angle of the LED wall 505 is known in the system in advance, and for example, the rendering engine 520 can be stored as information of the LED wall 505. The size of the image sensor of the camera 502 is also known and set in advance for calculation. The position, imaging direction, and zoom angle of view of the camera 502 are input from the camera tracker 560 (see Fig. 5) as imaging information.

Therefore, the rendering engine 520 can estimate at which position in the captured video vC the boundary marker 60 is displayed by real-time calculation by acquiring the imaging information from the camera tracker 560 for each frame of the captured video vC.

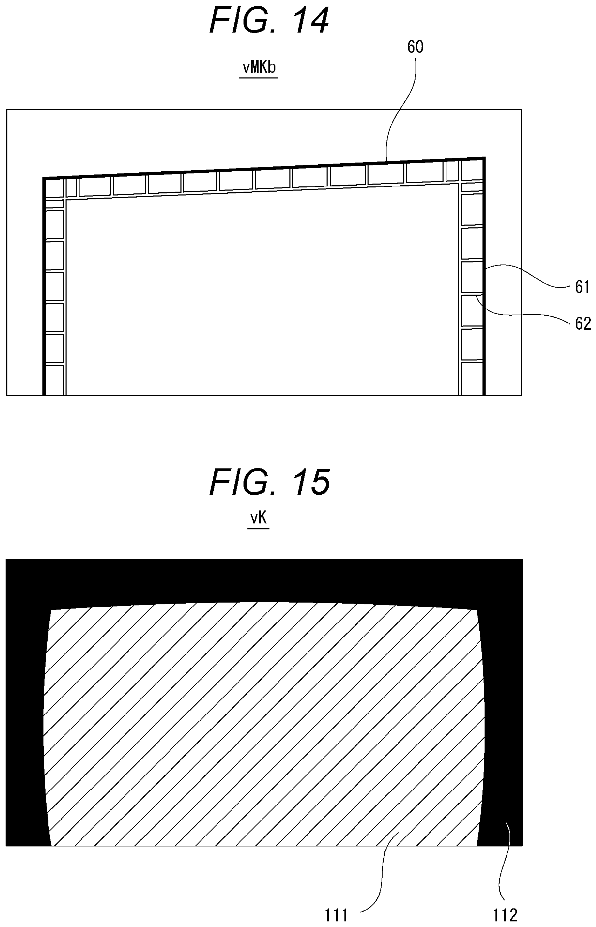

Then, the rendering engine 520 generates a marker position estimation image vMKb indicating the estimated boundary marker 60 as illustrated in Fig. 14, for example.

Here, the position of the boundary marker 60 in the marker position estimation image vMKb in Fig. 14 is an ideal position in a case where there is no influence of lens distortion. On the other hand, the position of the boundary marker 60 in the marker extraction image vMKa of Fig. 13 is a position affected by the lens distortion of the camera 502.

By using the marker extraction image vMKa and the marker position estimation image vMKb, it is possible to detect the distortion amount due to the lens and the peripheral light amount drop amount.

The rendering engine 520 performs the peripheral light amount drop amount/distortion amount detection processing P13.

In this processing, the rendering engine 520 calculates the peripheral light amount drop amount and the distortion amount using the marker extraction image vMKa and the marker position estimation image vMKb. As the calculation processing, for example, as the peripheral light amount drop amount, a plurality of images in which the peripheral light amount drop amount is added to the marker position estimation image vMKb by different amounts is prepared, and a difference between the marker extraction image vMKa and the marker position estimation image vMKb is taken to select the peripheral light amount drop amount that minimizes the sum of the absolute values of the differences of the respective pixels. The same method can be used for the distortion amount. As will be described in detail later, the peripheral light amount drop amount and the distortion amount in the captured video vC are obtained by this processing.

The rendering engine 520 performs the mask generation processing P14.

The rendering engine 520 generates a mask vK of Fig. 15 using the marker extraction image vMKa or the image obtained by adding the distortion amount to the marker position estimation image vMKb. The mask vK is information indicating the first region 111 (hatched portion) in which the captured video vC is used in the combining processing P19 and the second region 112 in which the CG video (for example, the background video vB) is combined. The first region 111 is a region inside the boundary marker 60 in the target frame of the captured video vC. The second region 112 is a region including the boundary marker 60 and located outside the first region 111.

Note that, in the mask vK, all values corresponding to the respective pixels in the first region 111 are set to "1", and all values corresponding to the respective pixels in the second region 112 are set to "0".

Alternatively, the mask vK may generate an α-channel image having a value that gradually transitions from "1" to "0" by providing a boundary region (a blend region 111a to be described later) with the second region 112 in the first region 111. Details will be described later.

The rendering engine 520 performs the peripheral light amount drop/distortion addition processing P15 or peripheral light amount drop/distortion removal processing **P16.**

The peripheral light amount drop/distortion addition processing P15 is processing of adding the peripheral light amount drop amount and the distortion amount similar to those of the captured video vC of the camera 502 to the background video vB using the peripheral light amount drop amount and the distortion amount obtained in the peripheral light amount drop amount/distortion amount detection processing **P13.**

The peripheral light amount drop/distortion removal processing P16 is processing of applying the opposite characteristic to the captured video vC using the peripheral light amount drop amount and the distortion amount obtained in the peripheral light amount drop amount/distortion amount detection processing P13 and removing the peripheral light amount drop and distortion from the captured video vC.

Which one of these processes is performed is determined by the selection processing P17 and P18.

The selection processing P17 selects a case where the captured video vC is output as it is (referred to as "A course" for description) and a case where the peripheral light amount drop/distortion removal processing P16 is performed on the captured video vC and the captured video vC is output (referred to as "B course" for description).

The selection processing P18 selects a case (A course) where the peripheral light amount drop/distortion addition processing P15 is performed on the background video vB and the background video vB is output and a case (B course) where the background video vB is output as it is.

In a case where the A course is selected in the selection processing P17 and P18, the combining processing P19 is performed on the captured video vC and the background video vB to which the peripheral light amount drop amount and the distortion amount are added. In this case, videos taking advantage of distortion or light amount drop caused by the camera 502 are combined.

In a case where the B course is selected in the selection processing P17 and P18, the combining processing P19 is performed on the captured video vC from which the peripheral light amount drop and distortion have been removed and the background video vB. In this case, videos without distortion or light amount drop caused by the camera 502 are combined.

The A course and the B course only needs to be appropriately selected according to production intention of the producer.

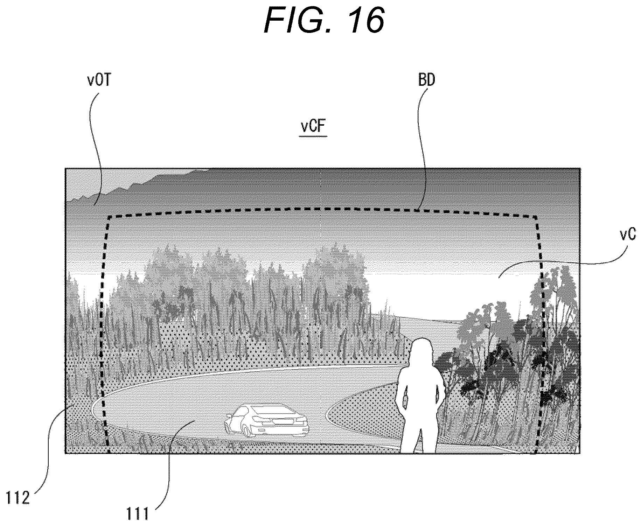

In the combining processing P19, the rendering engine 520 combines the captured video vC and the background video vB selected in the A course or the B course using the mask vK, and generates the final output video vCF as illustrated in Fig. 16.

The final output video vCF becomes a video in which a portion of the background video vB corresponding to the second region 112 is added as an out-of-frame additional video vOT on the outside of the broken line BD with respect to the captured video vC corresponding to the first region 111 of the mask vK indicated as the inside of the broken line BD. That is, a part of the CG video generated as the background video vB is added as the out-of-frame additional video vOT to the in-plane region outside the boundary marker 60 including the boundary marker 60 in the captured video vC.

By performing the captured video processing as described above, for example, by the rendering engine 520, even if the imaging range protrudes from the LED wall 505, the background video vB is added to the protruding region, so that the protrusion can be prevented.

Note that the above captured video processing (P11 to P19) is executed in real time at the time of imaging by a device having the configuration of the information processing apparatus 70 as the rendering engine 520, the camera 502, or another device.

Alternatively, the above captured video processing (P11 to P19) may be executed in the information processing apparatus 70 serving as a video editing apparatus in the post-production ST3.

Moreover, a part of the captured video processing (P11 to P19) may be performed in real time at the time of imaging, and a part thereof may be executed in the post-production ST3.

For example, the marker extraction processing P11 and the marker position estimation processing P12 may be performed at the time of imaging, and the others may be performed in the post-production ST3. Furthermore, for example, the marker extraction processing P11 to the selection processing P17 and P18 may be performed at the time of imaging, and the combining processing P19 may be executed in the post-production ST3. Other examples are contemplated.

In a case where a part or the whole of the captured video processing (P11 to P19) is performed in the post-production ST3, it is sufficient if information necessary for the post-production ST3 is stored.

For example, in a case where all of the captured video processing (P11 to P19) is performed in the post-production ST3, it is sufficient if the captured video vC, the background video vB, the marker generation information Imk, the imaging information (the position, the imaging direction, and the angle of view of the camera 502 in each frame), and the arrangement information of the LED wall 505 are stored, and the information processing apparatus 70 that performs the post-production ST3 can acquire the information.

Furthermore, for example, in a case where only the combining processing P19 is executed in the post-production ST3, it is sufficient if the information processing apparatus 70 that performs the post-production ST3 can acquire the captured video vC and the background video vB of the A course or the B course and the mask vK.

Furthermore, in the example of Fig. 9, the background video vB is used as the source of the out-of-frame additional video vOT, but the CG video serving as the out-of-frame additional video vOT may be generated separately from the background video vB.

Furthermore, Fig. 10 illustrates an example in which the background video vB is generated including the outside of the actual display area 100. In this case, the background video vB can be used for the imaging range protruding from the LED wall 505, but in a case where the background video vB protrudes more greatly, or in a case where the background video vB is a video of only the actual display area 100, it is conceivable to generate the CG video serving as the out-of-frame additional video vOT separately from the background video vB.

### <4. Processing Example>

A processing example of the information processing apparatus 70 including the marker processing and the captured video processing as illustrated in Fig. 9 will be described. Here, for example, it is assumed that the rendering engine 520 performs the marker processing and the captured video processing in real time at the time of imaging.

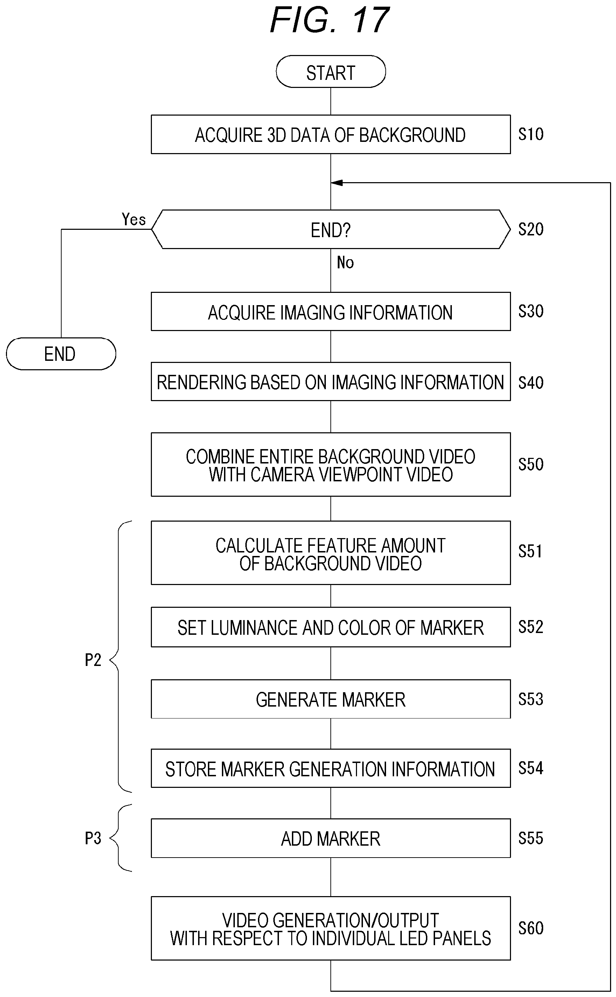

Fig. 17 is an example in which the marker processing is added to the processing at the time of rendering described in Fig. 6. Since steps S10 to S50 are similar to those in Fig. 6, redundant description is avoided.

In the processing up to step S50, the frame of the background video vB including the capturing region video vBC (inner frustum) is generated.

The rendering engine 520 performs the marker processing from step S51 to step S55 on the background video vB. Note that "P2" and "P3" are added to indicate correspondence with the marker processing in Fig. **9****.**

In step S51, the rendering engine 520 calculates the feature amount of the background video vB. The feature amount is luminance, color, edge, or the like.

In step S52, the rendering engine 520 sets the luminance and color of the boundary marker 60 that can be easily distinguished from the background according to the feature amount of the background video vB, and generates the marker image vMK having the boundary marker 60 according to the setting in step S53.

For example, if the background video vB indicates a bright scene, the luminance of the boundary marker 60 is decreased, and if the background video vB indicates a dark scene, the luminance of the boundary marker 60 is increased.

Furthermore, for example, in the case of a blue background, the luminance is set to a comparable and conspicuous color. This can prevent flare due to the use of the bright boundary marker 60 in a dark scene.

Furthermore, for example, in a case where the background video vB has many vertical lines as edges, the boundary marker 60 is set to a pattern having many horizontal line components.

The boundary marker 60 may be generated by combining features of luminance, color, and edge.

Furthermore, the boundary marker 60 according to the feature amount may be non-uniform, for example, such that the right half is bright and the left half is dark. That is, a change may be made according to the feature of the background of the portion where the boundary marker 60 is displayed.

In step S54, the rendering engine 520 stores the marker generation information Imk for the boundary marker 60 of the current frame in the storage medium. That is, the marker generation information Imk can be read out in association with the current frame at a later time point.

In step S55, the rendering engine 520 performs processing of adding the boundary marker 60 to the background video vB.

Then, in step S60, the rendering engine 520 outputs the background video vB including the boundary marker 60 as illustrated in Fig. 10B, and causes the LED wall 505 to display the background video vB.

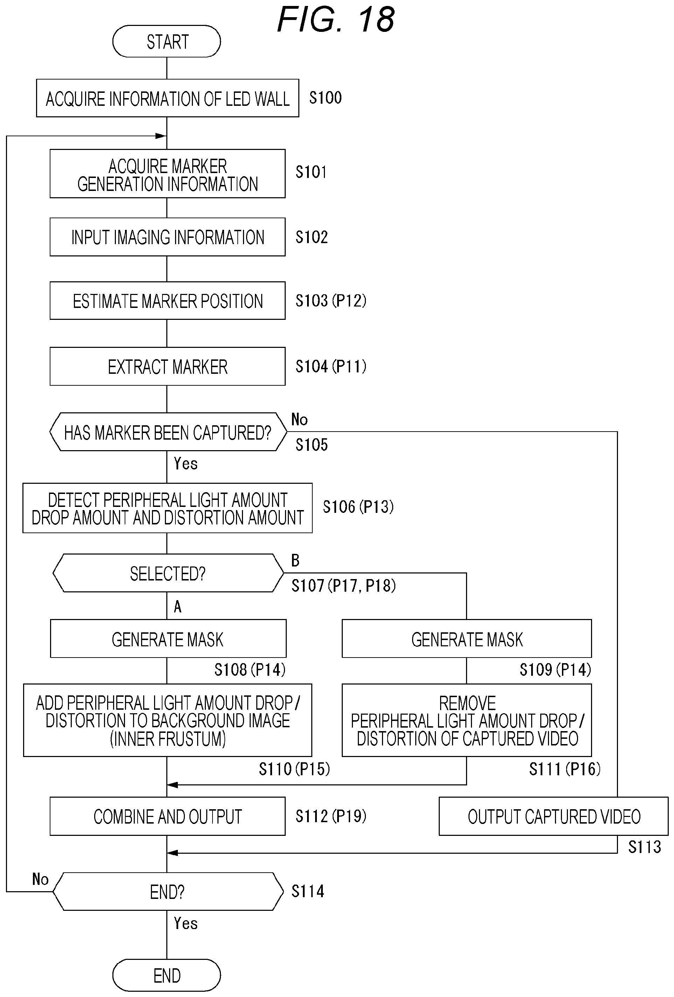

Fig. 18 illustrates an example of captured video processing. "P11" to "P19" are added to indicate correspondence with the captured video processing of Fig. 9.

The rendering engine 520 acquires information of the LED wall 505 in step S100 prior to imaging, for example. That is, it is information of the arrangement position and angle of the LED wall 505 for the marker position estimation processing P12.

After the start of imaging, the rendering engine 520 performs the processing of steps S101 to S113 for each frame of the captured video vC.

In step S101, the rendering engine 520 acquires the marker generation information Imk for the frame that is a current processing target.

In step S102, the rendering engine 520 acquires the imaging information for the frame that is a current processing target, particularly the information for the position, imaging direction, and angle of view of the camera 502 by the camera tracker 560.

In step S103, the rendering engine 520 performs the marker position estimation processing P12 using the information of the LED wall 505, the imaging information, and the marker generation information Imk (pattern shape and size) to generate the marker position estimation image vMKb.

Furthermore, in step S104, the rendering engine 520 sets a threshold on the basis of the marker generation information Imk (luminance and color), and performs the marker extraction processing P11 from the captured video vC to generate the marker extraction image vMKa.

Note that the order of steps S103 and S104 may be reversed.

Furthermore, in order to reduce the processing load in real time, step S103 may be executed only when the processing proceeds from step S105 to step S106.

In step S105, the rendering engine 520 determines whether or not a part or the whole of the boundary marker 60 have been captured for the current frame.

By the processing of step S104, it can be determined whether or not a part or the whole of the boundary marker 60 is reflected in the current frame.

If the boundary marker 60 is not reflected in the current frame, it is not necessary to execute the captured video processing according to the boundary marker 60. Therefore, the rendering engine 520 proceeds from step S105 to step S113, and outputs the frame of the captured video vC as it is as the final output video vCF obtained by imaging. For example, it is stored in a storage medium as one frame of an output video obtained by imaging, or transmitted to an external device.

On the other hand, in a case where the boundary marker 60 is reflected in the current frame, the combining processing P19 for replacing the outside video including the boundary marker 60 is required by the captured video processing. Accordingly, the rendering engine 520 proceeds from step S105 to step S106, and performs the peripheral light amount drop amount/distortion amount detection processing P13.

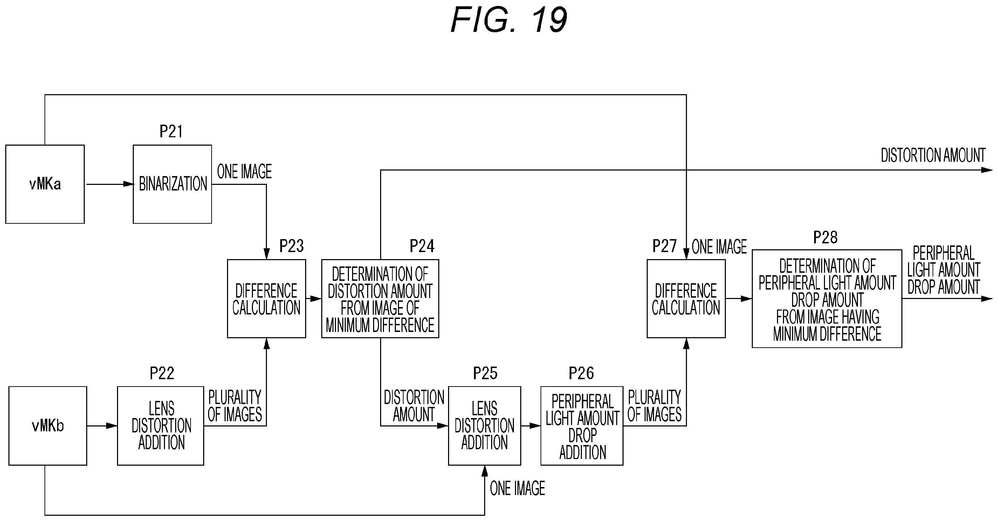

Fig. 19 illustrates a specific example of the peripheral light amount drop amount/distortion amount detection processing P13.

The rendering engine 520 calculates the peripheral light amount drop amount and the distortion amount using the marker extraction image vMKa and the marker position estimation image vMKb.

First, the rendering engine 520 performs binarization processing P21 on the marker extraction image vMKa. Since the marker extraction image vMKa is an image obtained by extracting the boundary marker 60 from the captured video vC, the marker extraction image vMKa is not in a binary state. This is binarized to remove the peripheral light amount drop.

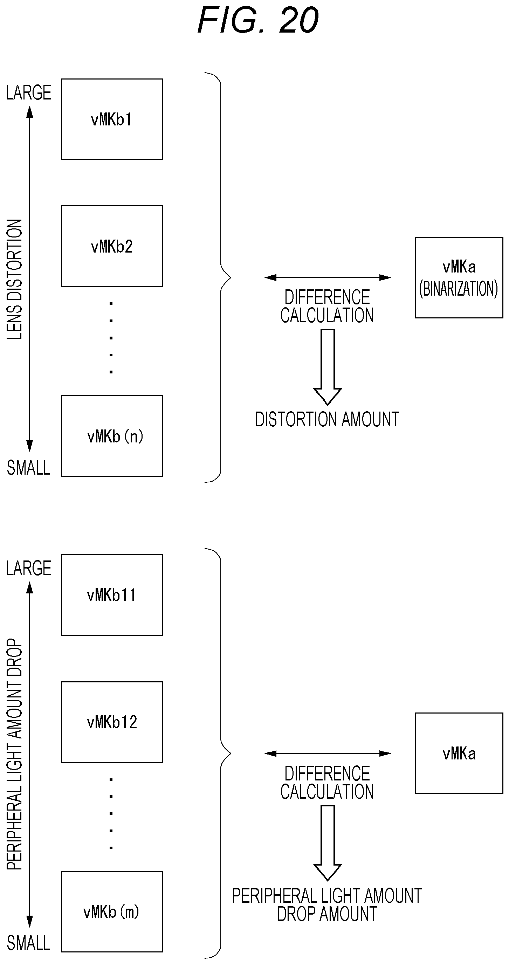

Furthermore, as the lens distortion addition processing P22, the rendering engine 520 generates an image to which lens distortion of several levels from small to large is added on the basis of the marker position estimation image vMKb. For example, as illustrated in Fig. 20, n images are generated as images vMKb(n) from an image vMKb1. The distortion amounts of the images vMKb1 to vMKb(n) are made different in stages.

Next, the rendering engine 520 performs difference calculation P23. This is processing of calculating a difference between each of the images vMKb1 to vMKb(n) and the binarized marker extraction image vMKa.

Then, the rendering engine 520 performs distortion amount determination processing P24. This is processing of determining an image having the smallest difference from the binarized marker extraction image vMKa among the images vMKb1 to vMKb(n), and determining the distortion amount added to the image as the distortion amount in the captured video vC of the current frame. For example, in a case where the image vMKb2 is an image having the smallest difference from the binarized marker extraction image vMKa, the distortion amount added to the image vMKb2 is the distortion amount to be detected.

Thus, the distortion amount in the captured video vC is detected.

Next, the rendering engine 520 performs lens distortion addition processing P25 on the marker position estimation image vMKb in order to detect the peripheral light amount drop amount. That is, it is assumed that the marker position estimation image vMKb has lens distortion similarly to the captured video vC.

Note that the image (for example, the image vMKb2) selected in the distortion amount determination processing P24 may be used as it is without performing the lens distortion addition processing P25. This is because the same lens distortion amount is added to the original marker position estimation image vMKb.

In peripheral light amount drop addition processing P26, on the basis of the marker position estimation image vMKb (or similar image vMKb2) to which the detected distortion amount is added, an image to which the peripheral light amount drop amounts of several levels from small to large are added is generated. For example, as illustrated in Fig. 20, m images are generated as images vMKb(m) from an image vMKb11. The peripheral light amount drop amounts of the images vMKb11 to vMKb(m) are made different in stages.

Next, the rendering engine 520 performs difference calculation P27. This is processing of calculating a difference between each of the images vMKb(m) from the image vMKb11 and the marker extraction image vMKa.

Then, the rendering engine 520 performs peripheral light amount drop amount determination processing P28. This is processing of determining an image having the smallest difference from the marker extraction image vMKa among the image vMKb11 to the image vMKb(m), and determining the peripheral light amount drop amount added to the image as the peripheral light amount drop amount in the captured video vC of the current frame. For example, in a case where the image vMKb12 is an image having the smallest difference from the marker extraction image vMKa, the peripheral light amount drop amount added to the image vMKb12 is the peripheral light amount drop amount to be detected. As described above, the peripheral light amount drop amount in the captured video vC is detected.

After performing the peripheral light amount drop amount/distortion amount detection processing P13 as illustrated in Fig. 19, the rendering engine 520 branches the processing depending on which one of the A course and the B course is set by the selection processing P17 and P18 in step S107 of Fig. 18.

In the case of the A course, the rendering engine 520 proceeds to step S107, performs the mask generation processing P14, and performs the peripheral light amount drop/distortion addition processing P15 on the background video vB in step S110.

In the case of the B course, the rendering engine 520 proceeds to step S109, performs the mask generation processing P14, and performs peripheral light amount drop/distortion removal processing P16 on the captured video vC in step S111.

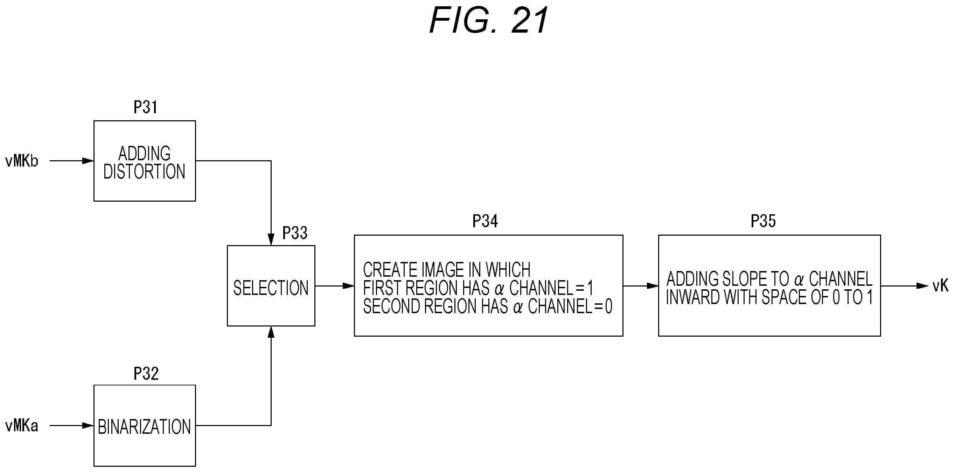

The mask generation processing P14 in step S108 will be described with reference to Fig. 21.

As for the mask vK, as described above, the first region 111 may be "1", and the second region 112 may be "0", but Fig. 21 illustrates a processing example for blending at a boundary portion between the first region 111 and the second region 112. Note that Fig. 21 illustrates a processing example in step S108, that is, when the A course is selected.

The mask vK can be generated on the basis of either the marker extraction image vMKa or the marker position estimation image vMKb.

As selection processing P33 in Fig. 21, the rendering engine 520 selects on the basis of which of the marker extraction image vMKa and the marker position estimation image vMKb the mask vK is to be generated.

In a case where the marker position estimation image vMKb is selected, the rendering engine 520 adds the distortion amount detected in step S106 to the marker position estimation image vMKb by distortion addition processing P31.

In the case of selecting the marker extraction image vMKa, the rendering engine 520 binarizes the marker extraction image vMKa by the binarization processing P32.

The rendering engine 520 performs value setting processing P34 on the marker position estimation image vMKb to which the distortion is added or the binarized marker extraction image vMKa.

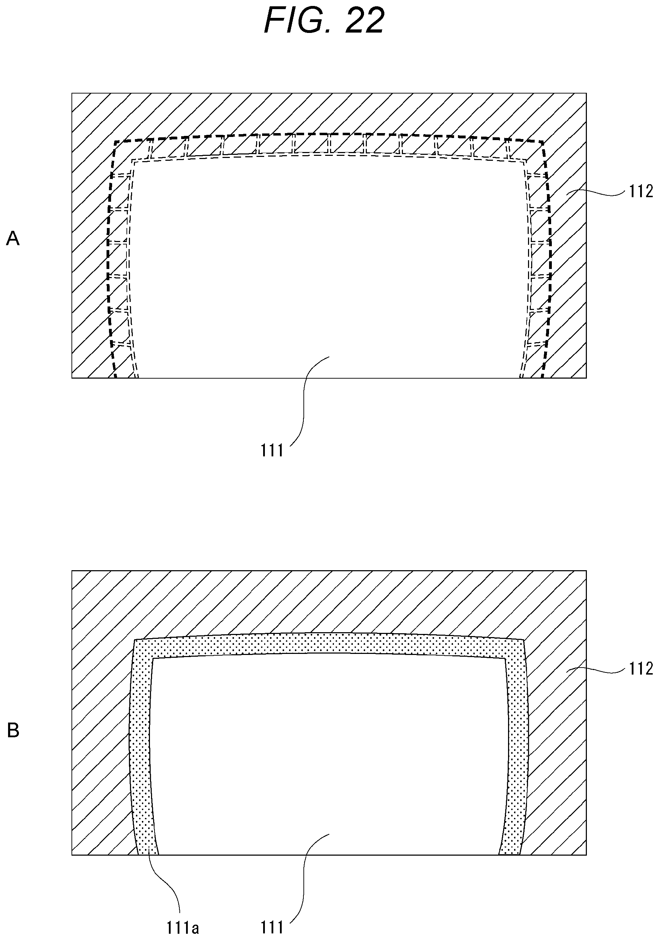

In the value setting processing P34, as illustrated in Fig. 22A, the mask vK in which the inner first region 111 has α channel = 1 and the outer second region 112 has channel = 0 is generated.

Note that, although the boundary marker 60 is indicated by a broken line in Fig. 22A, this is added to indicate that the first region 111 is a region inside the boundary marker 60, and the boundary marker 60 is not added to the mask vK.

Next, the rendering engine 520 performs slope addition processing P35.

As illustrated in Fig. 22B, a blend region 111a is set at a boundary portion between the first region 111 and the second region 112. In the blend region 111a, the α channel is sloped so that the α channel changes between "0" and "1" in the direction away from the position in contact with the second region 112.

For example, the value of the α channel is changed as "0.1", "0.2", ..., and "0.9" from the outside to the inside.

The rendering engine 520 outputs the mask vK with the slope added in this manner.

After the mask generation processing P14 is performed in step S108 as described above, the peripheral light amount drop/distortion addition processing P15 is performed on the background video vB in step S110.

Since it is a case where the A course is selected, the combining processing P19 is performed by the captured video vC, the background video vB to which the peripheral light amount drop/distortion is added, and the mask vK generated in step S108.

Note that, in the mask generation processing P14 in a case where the B course is selected and the processing proceeds from step S107 to step S109, the process of providing the blend region 111a is performed similarly to Fig. 21. However, in this case, in a case where the mask vK is generated on the basis of the marker position estimation image vMKb, it is not necessary to add distortion to the marker position estimation image vMKb. The value setting processing P34 and the slope addition processing P35 are only required to be performed using the marker position estimation image vMKb as it is.

Furthermore, in a case where the mask vK is generated on the basis of the marker extraction image vMKa, the marker extraction image vMKa is binarized, processing of further removing distortion is performed, and then value setting processing P34 and the slope addition processing P35 are performed.

After the mask generation processing P14 is performed in step S109 as described above, the peripheral light amount drop/distortion removal processing P16 is performed on the captured video vC in step S111.

Since it is a case where the B course is selected, the combining processing P19 is performed by the captured video vC from which the peripheral light amount drop/distortion has been removed, the background video vB, and the mask vK generated in step S109.

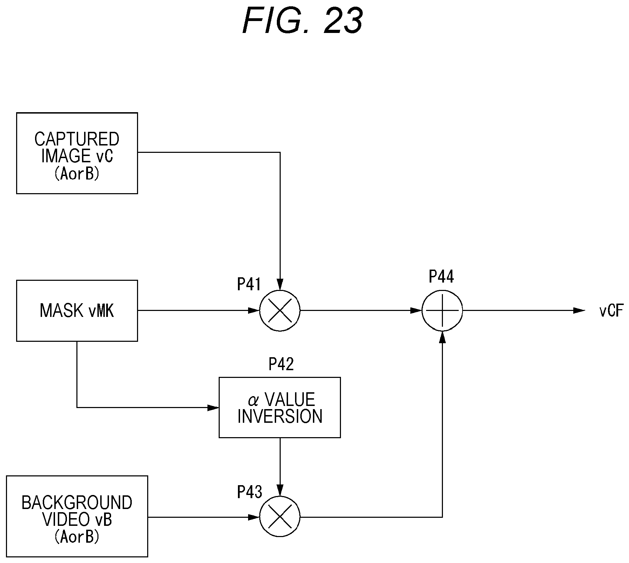

In step S112, the rendering engine 520 performs the combining processing P19 of the captured video vC and the background video vB. Fig. 23 illustrates an example of the combining processing P19.

In the combining processing P19, the rendering engine 520 performs multiplication processing P41 of multiplying the pixel value of the frame of the captured video vC by the α value of the mask vK. As described above, since the first region 111 has α channel = "1", the pixel value in the captured video vC is maintained as it is. However, the pixel of the blend region 111a is multiplied by a coefficient set in a slope shape from "1" to "0" from the inside to the outside according to the position of the pixel. Since the second region 112 has α channel = "0", the pixel value in the captured video vC is "0".

Furthermore, the rendering engine 520 performs α value inversion processing P42 for the mask vK and then performs multiplication processing P43 for multiplying the background video vB.

By the α value inversion processing P42, the first region 111 has α channel = "0", and the second region 112 has α channel = "1". The blend region 111a has a slope value from "1" to "0" inward from the second region 112.

Then, in the multiplication processing P43, since the second region 112 has α channel = "1", the pixel value in the background video vB is maintained as it is. Since the first region 111 has α channel = "0", the pixel value in the background video vB is "0". However, the pixel of the blend region 111a is multiplied by a coefficient set in a slope shape from "1" to "0" from the outer side to the inner side according to the position of the pixel.

The rendering engine 520 performs addition combining processing P44 on the outputs of the multiplication processing P41 and P43.

Thus, the inside of the blend region 111a in the first region 111 is the captured video vC, the second region 112 is the background video vB, and the blend region 111a gradually changes from values in which relative importance of the captured video vC is high to values in which relative importance of the background video vB is high from the inside to the outside, and the final output video vCF as illustrated in Fig. 16 is obtained.

Note that although Fig. 23 illustrates an example in which what is called α blending is performed, even in a case where the blend region 111a is not provided in the mask vK and the α value is set to "1" for the first region 111 and "0" for the second region 112, combining is performed by the processing of Fig. 23.

In the case of virtual production, the LED wall 505 may not be focused so that problems such as moire do not occur. In this case, the positions, the luminances, and the colors of the background video vB and the captured video vC to be combined need not be exactly matched in units of pixels.

This is the end of the processing for one frame. In step S114, the rendering engine 520 determines whether or not to end the processing, and if not, returns to step S101. That is, similar processing is continuously performed corresponding to the next frame.

For example, at the time of imaging end, the rendering engine 520 determines end in step S114, and ends the processing of Fig. 18.

### <5. Processing in Pre-Visualization>

In the above captured video processing, the marker extraction processing P11, the marker position estimation processing P12, the peripheral light amount drop amount/distortion amount detection processing P13, the mask generation processing P14, and the like are performed, but some of these may be performed before imaging. Thus, it is possible to reduce the burden of captured video processing in real time at the time of imaging.

Accordingly, pre-visualization before imaging will be described.

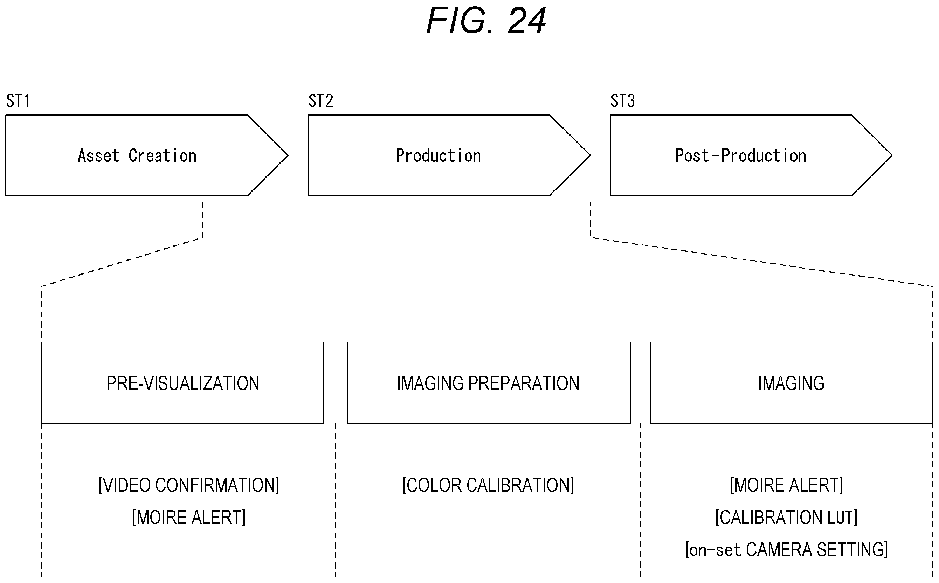

The positioning of the pre-visualization in the video production processing is illustrated in Fig. 24.

Fig. 24 illustrates flows of the asset creation ST1, the production ST2, and the post-production ST3 described above with reference to Fig. 4.

The production ST2 is a stage where imaging is actually performed in a studio, but this is divided into imaging preparation and imaging.

On the other hand, the pre-visualization is assumed to be mainly performed at a stage before imaging preparation. Note that the chronological order is not necessarily limited, but the pre-visualization only needs to be performed at a stage after the 3D model for rendering the background video vB is produced in the asset creation ST1.

In this sense, the pre-visualization may be considered to be performed at the final stage of the asset creation ST1, or may be considered to be performed at a stage before imaging preparation in the production ST2.

In the pre-visualization, processing called video confirmation and moire alert is performed. The video confirmation is processing for enabling a director or a staff member to confirm the captured video vC obtained by imaging before the imaging. The confirmation mainly including the color of the captured video vC can be performed by the simulation video.

The moire alert is, for example, processing of performing moire prediction when a staff virtually operates the camera position while checking the video, and issuing a warning in a case where the moire is predicted to appear. This makes it possible to avoid the occurrence of artifacts at the time of subsequent imaging.

At the stage of preparation for imaging, color calibration is performed together with various settings such as an LED and a camera in the imaging system 500. Specifically, a calibration look up table (LUT) that cancels a color change caused when the LED wall 505 is imaged by the camera 502 is generated. The calibration LUT is, for example, a 3D-LUT.

Note that, instead of the 3D-LUT, a combination of the matrix and the 1D-LUT or preparation for calibration performed in other video signal processing may be performed.

In the imaging stage, the moire alert, the calibration LUT, and on-set camera setting are performed.

The moire alert in this case is processing of outputting the moire alert to the camera operator or the like in real time in accordance with moire determination by the rendering engine 520.

The calibration LUT is a process of canceling a color change related to background video display by the LED wall 505, the camera 502, or the like by applying the LUT generated by color calibration in preparation for imaging.

The on-set camera setting is processing of acquiring camera settings set in the pre-visualization from, for example, a cloud server or the like and reflecting the camera settings in the camera 502 of the studio.

Fig. 25 illustrates a configuration of the imaging system 500 and a configuration for pre-visualization in parallel. An upper part of the drawing illustrates a simplified configuration of the imaging system 500 described in Fig. 5 and the like, and a lower part of the drawing illustrates a configuration (pre-visualization system 700) used in pre-visualization.

In Fig. 25, regarding the imaging system 500, the rendering engine 520, the LED processor 570, the LED wall 505, the camera 502, the captured video processing unit 85a, the operation monitor 550, or the output monitor 503 is illustrated.

The rendering engine 520 includes a rendering unit 520a and the marker processing unit 85b. Thus, the background video vB with the boundary marker 60 is displayed on the LED wall 505.

For the camera 502, the captured video processing unit 85a that performs processing on the captured video vC is illustrated. The captured video processing unit 85a is provided in the rendering engine 520 or the information processing apparatus 70 constituting another device.

The output final output video vCF is recorded as a main line video on a recording medium or transmitted to another device for broadcasting or distribution.

For the imaging system 500 as described above, for example, a pre-visualization system 700 is configured as a system outside the studio. The pre-visualization system 700 includes at least the information processing apparatus 70 that functions as the rendering engine 31 and a monitor 40.

The rendering engine 31 includes, for example, the information processing apparatus 70 separate from the rendering engine 520.

The rendering engine 31 includes a rendering unit 32 and a video processing unit 33.

The rendering unit 32 has a rendering function similar to that of the rendering unit 520a in the rendering engine 520 described above, and can generate the background video vBP on the basis of the 3D model.

The rendering unit 32 can perform rendering of the background video vB using at least the 3D model produced in the processing of the asset creation ST1. That is, the same 3D model as that used in the processing of the production ST2 is acquired from, for example, the asset server 530 (see Figs. 5 and 7), and rendering is performed using the 3D model.

Then, the rendering unit 32 can perform rendering of the background video vB including the capturing region video vBC (inner frustum) using the 3D model.

Note that, in order to generate the capturing region video vBC, the camera position, the imaging direction, and the angle of view are input to the rendering unit 32, and rendering is performed at the viewpoint position with respect to the 3D model corresponding thereto. Therefore, it is assumed that camerawork (transition of a camera path and an angle of view such as a position and an imaging direction of the camera 502) at the time of actual imaging has already been determined. It is possible to obtain the capturing region video vBC similar to that at the time of imaging by obtaining information of the camerawork at the time of actual imaging.

The background video generated by the rendering unit 32 is referred to as a "background video vBP" in the sense of being distinguished from the capturing region video vBC generated by the rendering engine 520 at the time of imaging for the sake of description.

The video processing unit 33 indicates a function of performing various types of video processing on the background video vBP. The video processing unit 33 has functions as the marker processing unit 85b, the captured video processing unit 85a, and an actual captured video conversion processing unit 33a.

The video processing unit 33 performs marker processing by the function of the marker processing unit 85b. That is, in the background video vBP, the boundary marker 60 is added to a portion to be a peripheral edge portion when displayed on the LED wall 505.

Furthermore, the video processing unit 33 performs actual captured video conversion processing by the function of the actual captured video conversion processing unit 33a. The actual captured video conversion processing is processing of generating the simulation video vSM imitating the camera 502 actually used for imaging. In the actual captured video conversion processing, the simulation video vSM is generated for the background video vBP using at least a processing parameter that implements a luminance or color characteristic at the time of imaging of the camera 502 used in the imaging system 500. Specifically, the video processing unit 33 adjusts parameters such as an RGB gain, a white balance value, a gamma value, and an offset value to the camera 502.

By setting a parameter related to luminance or color to be the same as that of the camera 502 at the time of imaging, the simulation video vSM having the same color as that of the captured video vC is generated, and the simulation video vSM is displayed on the monitor 40.

The monitor 40 indicates a monitor device that displays the video output from the information processing apparatus 70 as the rendering engine 31, and may be, for example, a monitor device in a place different from the imaging studio or a monitor device in the imaging studio. The monitor 40 may have any form as long as it displays the simulation video vSM at least at the stage of pre-visualization.

In the rendering engine 31, the rendering unit 32 generates the background video vBP, and the video processing unit 33 performs actual captured video conversion processing to generate the simulation video vSM. By displaying this on the monitor 40, the staff member can confirm the simulation video vSM having the same color as the background video included in the captured video vC at the time of imaging. Thus, it is possible to check the color prior to imaging and perform adjustment of the color in the camera 502 or the camera signal processing unit 515, or the like at the imaging preparation stage as necessary.

Here, the video processing unit 33 executes a part of the captured video processing on the simulation video vSM by the function of the captured video processing unit 85a.

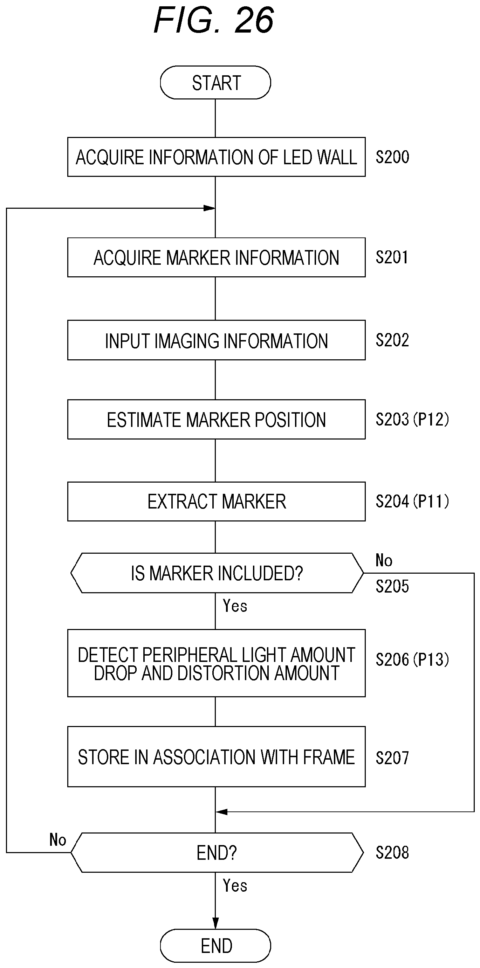

For example, Fig. 26 illustrates a processing example of the video processing unit 33.

In the video processing unit step S200, the video processing unit 33 acquires information of the arrangement position and the angle of the LED wall 505 at the time of imaging.

After the generation of the simulation video vSM is started, the video processing unit 33 performs the processing of steps S201 to S208 for each frame of the captured video vC.

In step S201, the video processing unit 33 acquires the marker generation information Imk for the frame that is the current processing target of the simulation video vSM.

In step S202, the video processing unit 33 acquires information of the position, the imaging direction, and the angle of view of the camera 502 as the imaging information at the time of actual imaging for the frame that is the current processing target. In a case where the camerawork is determined in advance, information of the position, the imaging direction, and the angle of view of the camera 502 corresponding to the frame of the simulation video vSM can be acquired.

In step S203, the video processing unit 33 performs the marker position estimation processing P12 using the information of the LED wall 505, the imaging information, and the marker generation information Imk (pattern shape and size) to generate the marker position estimation image vMKb.

Furthermore, in step S204, the video processing unit 33 sets a threshold on the basis of the marker generation information Imk (luminance and color), and performs the marker extraction processing P11 from the simulation video vSM to generate the marker extraction image vMKa.

In step S205, the video processing unit 33 determines whether or not a part or the whole of the boundary marker 60 is included in the current frame.

When the boundary marker 60 is not included in the current frame, the processing proceeds to step S208.

On the other hand, if the boundary marker 60 is included in the current frame, the video processing unit 33 proceeds to step S206 and performs the peripheral light amount drop amount/distortion amount detection processing P13.

Then, in step S207, the peripheral light amount drop amount and the distortion amount are stored as information of the current frame. For example, it is stored in a DB 42 of Fig. 25 so that it can be referred to when the captured video processing is performed at the time of imaging.

The video processing unit 33 repeats the above processing for each frame until it is determined in step S208 that the processing is ended.

By this processing, the DB 42 detects the peripheral light amount drop amount and the distortion amount for each frame of the captured video vC before imaging.

Therefore, step S106 need not be executed at the time of the captured video processing of Fig. 18. Moreover, it is sufficient if either one of steps S103 and S104 is performed. This is because a mask can be generated from either the marker extraction image vMKa or the marker position estimation image vMKb.

Note that the process up to the generation of the mask vK may be performed at the stage of the pre-visualization, so that in the captured video processing at the time of imaging, the mask vK is read for each frame, and the combining processing P19 is performed.

### <6. Summary and Modification Examples>

According to the above-described embodiments, the following effects can be obtained.

An information processing apparatus 70 according to the embodiment performs captured video processing and marker processing as, for example, a rendering engine 520, a processor in the camera 502, a device that receives an input of a captured video vC from the camera 502 at the time of imaging, or the like. Alternatively, the information processing apparatus 70 according to the embodiment is a device that performs video editing in post-production ST3 and performs captured video processing. Moreover, the information processing apparatus 70 according to the embodiment serves as the rendering engine 31 used at the stage of pre-visualization and performs marker processing and captured video processing.

Such an information processing apparatus 70 includes a captured video processing unit 85a that performs determination processing of determining a position of a boundary marker in a target frame of a captured video vC with respect to the captured video vC obtained by imaging, by the camera 502, an LED wall 505 that displays a video to which the boundary marker 60 is added to a virtual video such as the background video vB.

By detecting the boundary marker 60 in the captured video vC, even in a case where the imaging range of the camera 502 protrudes beyond the display range of the LED wall 505, it is possible to accurately detect a protruding position and an amount and perform handling processing. For example, it is possible to accurately perform, for example, compensation of a video of a protruding portion and the like, and it is possible to prevent wasting of imaging.

Furthermore, as a result, the camera operator 512 does not have to be forcibly conscious so that the imaging range falls within the range of the LED wall 505 at the time of imaging, and the degree of freedom of framing is expanded.

In the embodiment, the captured video processing unit 85a performs, as the determination processing, processing of extracting the boundary marker 60 from the target frame of the captured video vC on the basis of the marker generation information Imk. That is, in marker extraction processing P11, the captured video processing unit 85a in the information processing apparatus 70 such as the rendering engine 520 acquires luminance and color information of the boundary marker 60 from the marker generation information Imk, and extracts the boundary marker 60 in the captured video vC accordingly.

In a case where a clear luminance or color is selected for the color or the background content of the background video vB and the boundary marker 60 is generated, it is possible to accurately extract the boundary marker 60 from the captured video vC by obtaining the luminance or color information.

Furthermore, in other words, the luminance and color of the boundary marker 60 may be set according to the content of the background video vB. Therefore, it is possible to make the boundary marker 60 stand out in the background video vB.

In the embodiment, the captured video processing unit 85a performs, as the determination processing, marker position estimation processing P12 of estimating the position of the boundary marker 60 in the target frame of the captured video vC on the basis of the imaging information including position information of the camera 502 at the time of imaging, an imaging direction, and an angle of view, and position information of the LED wall 505.

Thus, it is possible to accurately determine the position of the boundary marker 60 in the captured video vC in a state where there is no lens distortion or the like.

In the embodiment, the captured video processing unit 85a performs first determination processing (marker extraction processing P11) of extracting the boundary marker 60 from the target frame of the captured video vC and second determination processing (marker position estimation processing P12) of estimating the position of the boundary marker 60 in the target frame of the captured video vC. Then, the captured video processing unit 85a performs processing of calculating the distortion amount of the captured video vC using the marker extraction image vMKa and the marker position estimation image vMKb which are results of the above (see step S106 in Fig. 18 and Fig. 19).

By obtaining the distortion amount, it is possible to accurately perform distortion addition to the background video vB or the like to be an out-of-frame additional video vOT and distortion removal from the captured video vC, and it is possible to combine the out-of-frame additional video vOT without discomfort. Thus, the quality of a final output video vCF can be improved.

Furthermore, in the embodiment, the captured video processing unit 85a performs processing of calculating a peripheral light amount drop amount of the captured video vC using a marker extraction image vMKa and marker position estimation image vMKb in first determination processing (marker extraction processing P11) and second determination processing (marker position estimation processing P12) (see step S106 in Fig. 18 and Fig. 19).

By obtaining the peripheral light amount drop amount, it is possible to accurately add a peripheral light amount drop to the out-of-frame additional video vOT and remove the peripheral light amount drop from the captured video vC, and it is possible to combine the out-of-frame additional video vOT without discomfort. Thus, the quality of the final output video vCF can be improved.

In the embodiment, the captured video processing unit 85a performs processing of generating a mask vK for distinguishing a first region 111 that is inside the boundary marker 60 and a second region 112 that is outside the first region 111 in the target frame of the captured video vC, and combining processing of combining the out-of-frame additional video vOT that is a video corresponding to the second region 112 with a video of the first region 111 in the captured video vC using the mask vK. That is, the captured video processing unit 85a performs combining processing P19 using the mask vK generated in mask generation processing P14 (see steps S107 and S111 in Fig. 18, Fig. 21, and Fig. 23).

Thus, the combining processing is performed so as to replace the second region 112 including the boundary marker 60 in the captured video vC with the out-of-frame additional video vOT, and the final output video vCF in which a portion protruding from the LED wall 505 is also an appropriate background can be output.

Note that, as described above, such mask generation processing P14 and combining processing P19 may be performed in real time at the time of imaging, but one or both may be performed at the stage of the post-production ST3.

For example, if imaging information including the position information, the imaging direction, and the angle of view of the camera 502 at the time of imaging, the position information of the LED wall 505, and the marker generation information Imk are stored in association with each frame of the captured video vC, the processing of Fig. 18 can be performed in the post-production ST3.

Furthermore, if the background video vB is stored in association with each frame of the captured video vC, the background video vB can be used as it is in the processing of steps S109 and S110.

At the time of imaging, the mask vK may be generated in real time and stored in association with each frame of the captured video vC, and the mask vK may be read and used at the time of combining processing in the post-production ST3.

In the example of the embodiment, in the combining processing P19, the captured video processing unit 85a may combine the video of the first region 111 in the captured video vC with the out-of-frame additional video vOT to which the distortion amount or the peripheral light amount drop amount generated in the captured video vC is added. That is, this is a case where the A course is selected in the selection processing P17 and P18 of Fig. 9.

Thus, the out-of-frame additional video vOT to which similar distortion or peripheral light amount drop is applied is combined with the captured video vC of the first region 111 in the second region 112. Therefore, the out-of-frame additional video vOT is combined with the captured video vC without discomfort. In particular, in this case, the final output video vCF in a state in which the lens distortion or the like of the camera 502 is used can be obtained.

Note that the distortion amount can be calculated for each frame at the stage of pre-visualization (see Fig. 26). Thus, step S106 is unnecessary as the processing of Fig. 18 at the time of imaging, and the processing load for adding the distortion amount to the background video vB and the like to be the out-of-frame additional video vOT is reduced. Therefore, it is preferable for a case where the processing of Fig. 18 is performed in real time at the time of imaging.

Furthermore, in the example of the embodiment, there is a case where the captured video processing unit 85a performs, in the combining processing P19, combining of the video of the first region 111 in the captured video vC from which the distortion amount or the peripheral light amount drop amount has been removed with the out-of-frame additional video vOT (the background video vB and the like). That is, this is a case where the B course is selected in the selection processing P17 and P18 of Fig. 9.

Thus, the out-of-frame additional video vOT to which no distortion or peripheral light amount drop is applied is combined with the captured video vC from which the distortion or peripheral light amount drop of the first region 111 has been removed. Therefore, the out-of-frame additional video vOT is combined with the captured video vC without discomfort. In particular, in this case, the final output video vCF in a state in which the lens distortion of the camera 502 is canceled can be obtained.

Note that, by calculating the peripheral light amount drop amount for each frame at the stage of the pre-visualization (see Fig. 26), step S106 is unnecessary in the processing of Fig. 18 at the time of imaging, and the processing load for removing the peripheral light amount drop amount for the captured video vC is reduced. Therefore, it is preferable in a case where the processing of Fig. 18 is performed in real time at the time of imaging.

Furthermore, although the A course and the B course are selected, it is also conceivable to perform only the A course or only the B course without performing the selection processing P17 and P18.

That is, in the combining processing P19, the video of the first region 111 in the captured video vC and the out-of-frame additional video vOT (the background video vB or the like) to which the distortion amount or the peripheral light amount drop amount generated in the captured video vC is added may be always combined.

Alternatively, in the combining processing P19, the video of the first region 111 in the captured video vC from which the distortion amount or the peripheral light amount drop amount has been removed and the out-of-frame additional video vOT (the background video vB or the like) may be always combined.

In the embodiment, an example has been described in which the captured video processing unit 85a performs, in the combining processing P19, the combining by changing a video ratio of the captured video vC and the out-of-frame additional video vOT by the background video vB or the like in stages near the boundary between the first region 111 and the second region 112.

As described with reference to Figs. 22 and 23, the vicinity of the boundary of the first region 111 is set as the blend region 111a, and the α value of the mask vK is changed stepwise between "0" and "1". Thus, the boundary between the captured video vC and the out-of-frame additional video vOT can be made inconspicuous, and the quality of the final output video vCF can be improved.

In the embodiment, an example in which the rendered background video vB to be displayed on the LED wall 505 is used as the out-of-frame additional video vOT has been described.

For example, the background video vB is directly used as the out-of-frame additional video vOT. Thus, it is not necessary to separately produce the out-of-frame additional video vOT. Furthermore, for this reason, it is also suitable for combining processing in real time at the time of imaging.

However, the video of the second region 112 may be generated separately from the background video vB to be the out-of-frame additional video vOT.

In the embodiment, an example has been described in which the information processing apparatus 70 includes the marker processing unit 85b that performs processing of adding the boundary marker 60 to the background video vB (virtual video) to be displayed on the LED wall 505.

Thus, the boundary marker 60 is displayed on the LED wall 505. Therefore, the processing of the captured video processing unit 85a described above can be performed.

Note that the functions of the captured video processing unit 85a and the marker processing unit 85b may both be included in the information processing apparatus 70 such as the rendering engine 520, for example, but may be provided by separate information processing apparatuses 70.

In the embodiment, an example has been described in which the marker processing unit 85b generates the boundary marker 60 that indicates the boundary of the display area of the LED wall 505 and has a pattern that allows detection of a distortion amount or a peripheral light amount drop amount due to imaging by the camera 502, and adds the boundary marker to the background video vB.

For example, the boundary marker 60 has a boundary line 61 and a detection pattern 62. Thus, the detection processing of the peripheral light amount drop amount and the distortion amount in the captured video processing unit 85a, and the removal and addition processing thereof can be performed.

Note that the boundary marker 60 may include at least the boundary line 61, and it is sufficient if protrusion of the imaging range outside the frame of the LED wall 505 can be detected. That is, there is an example in which the detection pattern 62 is not provided.

In the embodiment, the marker processing unit 85b performs the processing of adding the boundary marker 60 to the position corresponding to the peripheral edge portion of the LED wall 505 in the background video vB displayed on the LED wall 505.

The entire region of the background video vB generated by rendering is not necessarily displayed on the LED wall 505. As illustrated in Fig. 10A, the background video vB having a wider range than the actual display area 100 may be generated. Therefore, as illustrated in Fig. 10B, the boundary marker 60 is added to the peripheral edge portion of the actual display area 100, which is the range actually displayed on the LED wall 505. Thus, as illustrated in Fig. 9, the boundary marker 60 is displayed on the peripheral edge portion of the LED wall 505, and the processing of the captured video processing unit 85a can be appropriately executed.

Note that, for example, when the entire background video vB as illustrated in Fig. 10A is displayed on the LED wall 505, it is appropriate to add the boundary marker 60 to the peripheral edge portion of the entire background video vB.

In the embodiment, the marker processing unit 85b performs processing of recording the marker generation information Imk (see step S54 in Fig. 17).

For example, the marker generation information Imk such as luminance, color, pattern shape, and size of the boundary marker 60 is stored in a recording medium. Thus, marker extraction can be performed from the captured video vC even at the timing after marker addition, for example, at the stage of the post-production ST3.

Note that the information processing apparatus 70 in Fig. 8 is an example in which the captured video processing unit 85a, which is a function of performing captured video processing, and the marker processing unit 85b, which is a function of performing marker processing, are both included as the video processing unit 33, but the present invention is not limited thereto. For example, the information processing apparatus 70 including the marker processing unit 85b but not including the captured video processing unit 85a, and the information processing apparatus 70 including the captured video processing unit 85a but not including the marker processing unit 85b are also assumed.

Furthermore, in the embodiment, the background video vB, which is the video to be displayed on the LED wall 505, is the virtual video obtained by the rendering using the 3D model, but for example, even in a case where a real video image is displayed on the LED wall 505, the marker processing for adding the boundary marker 60 and the captured video processing for the captured video vC are effective.

The program according to the embodiment is a program for causing a processor, for example, a CPU, a DSP, or the like, or a device including the processor to execute the processing illustrated in Figs. 17, 18, and 26.

That is, the program of the embodiment is a program for causing the information processing apparatus 70 to execute processing of determining the position of the boundary marker 60 in the target frame of the captured video vC with respect to the captured video vC obtained by imaging, by the camera, the display that displays the video (for example, a virtual video such as the background video vB) including the boundary marker 60 to be displayed on the peripheral edge portion in the display area of the display such as the LED wall 505.

With such a program, the information processing apparatus 70 operating in the production ST2 such as the rendering engine 520 described above, the information processing apparatus 70 used in the post-production ST3, or the information processing apparatus 70 used in pre-visualization can be implemented by various computer devices.

Such a program can be recorded in advance in an HDD as a recording medium built in a device such as a computer apparatus, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as what is called package software.

Furthermore, such a program may be installed from the removable recording medium into a personal computer and the like, or may be downloaded from a download site through a network such as a local area network (LAN) or the Internet.

Furthermore, such a program is suitable for providing the information processing apparatus 70 of the embodiments in a wide range. For example, by downloading the program to a personal computer, a communication apparatus, a portable terminal apparatus such as a smartphone or a tablet, a mobile phone, a gaming device, a video device, a personal digital assistant (PDA), or the like, it is possible to cause these apparatuses to function as the information processing apparatus 70 of the present disclosure.

Note that the effects described in the present specification are merely examples and are not limited, and other effects may be provided.

Note that the present technology can also have the following configurations.
(1) An information processing apparatus including:
   a captured video processing unit that performs determination processing of determining a position of a boundary marker in a target frame of a captured video with respect to a captured video obtained by imaging, by a camera, a display that displays a video including the boundary marker displayed at a peripheral edge portion in a display area of the display.
(2) The information processing apparatus according to (1) above, in which
   the captured video processing unit performs, as the determination processing, processing of extracting the boundary marker from the target frame of the captured video on the basis of generation information of the boundary marker.
(3) The information processing apparatus according to (1) or (2) above, in which
   the captured video processing unit performs, as the determination processing, processing of estimating a position of the boundary marker in the target frame of the captured video on the basis of imaging information including position information, an imaging direction, and an angle of view of the camera at a time of imaging, and position information of the display.
(4) The information processing apparatus according to any one of (1) to (3) above, in which
   the captured video processing unit performs:
   first determination processing of extracting the boundary marker from the target frame of the captured video;
   second determination processing of estimating the position of the boundary marker in the target frame of the captured video; and
   processing of calculating a distortion amount of the captured video on the basis of a determination result of the first determination processing and a determination result of the second determination processing.
(5) The information processing apparatus according to any one of (1) to (4) above, in which
   the captured video processing unit performs:
   first determination processing of extracting the boundary marker from the target frame of the captured video;
   second determination processing of estimating the position of the boundary marker in the target frame of the captured video; and
   processing of calculating a peripheral light amount drop amount of the captured video on the basis of a determination result of the first determination processing and a determination result of the second determination processing.
(6) The information processing apparatus according to any one of (1) to (5) above, in which
   the captured video processing unit performs:
   processing of generating a mask for distinguishing a first region that is inside the boundary marker and a second region that is outside the first region in the target frame of the captured video; and
   combining processing of combining an additional video that is a video corresponding to the second region with a video of the first region in the captured video using the mask.
(7) The information processing apparatus according to (6) above, in which
   the captured video processing unit performs,
   in the combining processing,
   combining of the video of the first region in the captured video with the additional video to which a distortion amount or a peripheral light amount drop amount generated in the captured video has been added.
(8) The information processing apparatus according to (6) above, in which
   the captured video processing unit performs,
   in the combining processing,
   combining of the video of the first region in the captured video from which the distortion amount or the peripheral light amount drop amount has been removed with the additional video.
(9) The information processing apparatus according to any one of (6) to (8) above, in which
   the captured video processing unit performs,
   in the combining processing,
   the combining by changing a video ratio of the captured video and the additional video in stages in a boundary region between the first region and the second region.
(10) The information processing apparatus according to any one of (6) to (9) above, in which
   a virtual video rendered to be displayed on the display is used as the additional video.
(11) The information processing apparatus according to any one of (1) to (10) above, including:
   a marker processing unit that performs processing of adding the boundary marker to a video to be displayed on the display.
(12) The information processing apparatus according to (11) above, in which
   the marker processing unit generates the boundary marker having a pattern that allows detection of a distortion amount or a peripheral light amount drop amount due to imaging by the camera, and adds the boundary marker to the video to be displayed on the display.
(13) The information processing apparatus according to (11) or (12) above, in which
   the marker processing unit performs processing of adding the boundary marker to a position corresponding to a peripheral edge portion of the display in the video to be displayed on the display.
(14) The information processing apparatus according to any one of (11) to (13) above, in which
   the marker processing unit performs processing of recording generation information of the boundary marker.
(15) The information processing apparatus according to any one of (1) to (14) above, in which
   the video displayed on the display is a virtual video obtained by rendering using a 3D model.
(16) An information processing apparatus including:
   a marker processing unit that performs processing of adding a boundary marker to be displayed at a peripheral edge portion in a display area of a display on a video to be displayed on the display to be imaged by a camera.
(17) An information processing method including:
   by an information processing apparatus, processing of determining a position of a boundary marker in a target frame of a captured video with respect to a captured video obtained by imaging, by a camera, a display that displays a video including the boundary marker displayed at a peripheral edge portion in a display area of the display.
(18) A program for causing an information processing apparatus to execute:
   processing of determining a position of a boundary marker in a target frame of a captured video with respect to a captured video obtained by imaging, by a camera, a display that displays a video including the boundary marker displayed at a peripheral edge portion in a display area of the display.

### REFERENCE SIGNS LIST

- 60: Boundary marker
- 70: Information processing apparatus
- 71: CPU
- 85: Video processing unit
- 85a: Output video processing unit
- 85b: Marker processing unit
- 111: First region
- 112: Second region
- 502: Camera
- 505: LED wall
- 520: Rendering engine
- vB: Background video
- vBC: Capturing region video (inner frustum)
- vC: Captured video
- vCF: Final output video
- vMK: Marker image
- vMKa: Marker extraction image
- vMKb: Marker position estimation image
- vOT: Out-of-frame additional video
- vK: Mask
- Imk: Marker generation information

## Claims

1. An information processing apparatus comprising:
a captured video processing unit that performs determination processing of determining a position of a boundary marker in a target frame of a captured video with respect to a captured video obtained by imaging, by a camera, a display that displays a video including the boundary marker displayed at a peripheral edge portion in a display area of the display.

2. The information processing apparatus according to claim 1, wherein
the captured video processing unit performs, as the determination processing, processing of extracting the boundary marker from the target frame of the captured video on a basis of generation information of the boundary marker.

3. The information processing apparatus according to claim 1, wherein
the captured video processing unit performs, as the determination processing, processing of estimating a position of the boundary marker in the target frame of the captured video on a basis of imaging information including position information, an imaging direction, and an angle of view of the camera at a time of imaging, and position information of the display.

4. The information processing apparatus according to claim 1, wherein
the captured video processing unit performs:
first determination processing of extracting the boundary marker from the target frame of the captured video;
second determination processing of estimating the position of the boundary marker in the target frame of the captured video; and
processing of calculating a distortion amount of the captured video on a basis of a determination result of the first determination processing and a determination result of the second determination processing.

5. The information processing apparatus according to claim 1, wherein
the captured video processing unit performs:
first determination processing of extracting the boundary marker from the target frame of the captured video;
second determination processing of estimating the position of the boundary marker in the target frame of the captured video; and
processing of calculating a peripheral light amount drop amount of the captured video on a basis of a determination result of the first determination processing and a determination result of the second determination processing.

6. The information processing apparatus according to claim 1, wherein
the captured video processing unit performs:
processing of generating a mask for distinguishing a first region that is inside the boundary marker and a second region that is outside the first region in the target frame of the captured video; and
combining processing of combining an additional video that is a video corresponding to the second region with a video of the first region in the captured video using the mask.

7. The information processing apparatus according to claim 6, wherein
the captured video processing unit performs,
in the combining processing,
combining of the video of the first region in the captured video with the additional video to which a distortion amount or a peripheral light amount drop amount generated in the captured video has been added.

8. The information processing apparatus according to claim 6, wherein
the captured video processing unit performs,
in the combining processing,
combining of the video of the first region in the captured video from which the distortion amount or the peripheral light amount drop amount has been removed with the additional video.

9. The information processing apparatus according to claim 6, wherein
the captured video processing unit performs,
in the combining processing,
the combining by changing a video ratio of the captured video and the additional video in stages in a boundary region between the first region and the second region.

10. The information processing apparatus according to claim 6, wherein
a virtual video rendered to be displayed on the display is used as the additional video.

11. The information processing apparatus according to claim 1, comprising:
a marker processing unit that performs processing of adding the boundary marker to a video to be displayed on the display.

12. The information processing apparatus according to claim 11, wherein
the marker processing unit generates the boundary marker having a pattern that allows detection of a distortion amount or a peripheral light amount drop amount due to imaging by the camera, and adds the boundary marker to the video to be displayed on the display.

13. The information processing apparatus according to claim 11, wherein
the marker processing unit performs processing of adding the boundary marker to a position corresponding to a peripheral edge portion of the display in the video to be displayed on the display.

14. The information processing apparatus according to claim 11, wherein
the marker processing unit performs processing of recording generation information of the boundary marker.

15. The information processing apparatus according to claim 1, wherein
the video displayed on the display is a virtual video obtained by rendering using a 3D model.

16. An information processing apparatus comprising:
a marker processing unit that performs processing of adding a boundary marker to be displayed at a peripheral edge portion in a display area of a display on a video to be displayed on the display to be imaged by a camera.

17. An information processing method comprising:
by an information processing apparatus, processing of determining a position of a boundary marker in a target frame of a captured video with respect to a captured video obtained by imaging, by a camera, a display that displays a video including the boundary marker displayed at a peripheral edge portion in a display area of the display.

18. A program for causing an information processing apparatus to execute:
processing of determining a position of a boundary marker in a target frame of a captured video with respect to a captured video obtained by imaging, by a camera, a display that displays a video including the boundary marker displayed at a peripheral edge portion in a display area of the display.
